# EUROPEAN PATENT APPLICATION

(11) **EP 4 848 567 A1**
(43) Date of publication of application: **02.12.2026**
(21) Application number: 25909745.9
(22) Date of filing: 17.01.2025
(51) Int. Cl.: H02N 2/00

(54) **MOTOR, CAMERA MODULE AND ELECTRONIC DEVICE**

(30) Priority: 24.12.2024 CN 202411909227
(71) Applicant: Huawei Technologies Co., Ltd., Shenzhen, Guangdong 518129 (CN)
(72) Inventor: WU, Yushun, Shenzhen, Guangdong 518129 (CN); DING, Xiaoheng, Shenzhen, Guangdong 518129 (CN); WAN, Haibo, Shenzhen, Guangdong 518129 (CN); ZHANG, Fuwei, Shenzhen, Guangdong 518129 (CN)
(74) Representative: Goddar, Heinz J.
(86) International application number: PCT/CN2025/073026
(87) International publication number: WO 2026/137545

(57) **Abstract**

This application provides a motor, a camera module, and an electronic device. The motor includes a base, a carrier, and a piezoelectric actuator, the carrier is movably connected to the base, the piezoelectric actuator is movably connected to the base and is fastened to the carrier, and the piezoelectric actuator is configured to drive the carrier to move in a first direction relative to the base; the piezoelectric actuator includes a pre-pressing component, a resonator, and a driven member; the driven member is movably connected to the base and is fastened to the carrier; the resonator is fastened to the pre-pressing component, the pre-pressing component is fastened to the base, the pre-pressing component is configured to press a driving foot of the resonator against the driven member, and the resonator is configured to drive, when being powered on, the driven member to drive the carrier to move in the first direction relative to the base; and the driven member has a first connecting surface, the carrier has a second connecting surface, and the first connecting surface is connected to the second connecting surface through magnetic attraction. The motor can have small magnetic interference, is miniaturized, and has high reliability.

## Description

This application claims priority to Chinese Patent Application No. 202411909227.8, filed with the China National Intellectual Property Administration on December 24, 2024 and entitled "MOTOR, CAMERA MODULE, AND ELECTRONIC DEVICE", which is incorporated herein by reference in its entirety.

### TECHNICAL FIELD

This application relates to the field of photographing device technologies, and in particular, to a motor, a camera module, and an electronic device.

### BACKGROUND

With development of science and technology and a demand of an electronic device market, a camera module is increasingly widely used in electronic devices. The camera module may have a plurality of functions. A focus function of the camera module gradually becomes a focus of attention of a user. A moving-coil motor is disposed in a conventional camera module, and can drive a lens to move to complete focusing. However, because magnets of the moving-coil motor are not properly arranged and the camera module has high integration, another part is prone to magnetic interference to a large degree. To reduce magnetic interference of the magnet to the another part, a size of the camera module needs to be increased to free up space for avoiding magnetic interference. Consequently, a size of the conventional camera module is large.

### SUMMARY

This application provides a motor with small magnetic interference and a small size, a camera module, and an electronic device.

According to a first aspect, this application provides a motor. The motor includes a base, a carrier, and a piezoelectric actuator, the carrier is movably connected to the base, the piezoelectric actuator is movably connected to the base and is fastened to the carrier, and the piezoelectric actuator is configured to drive the carrier to move in a first direction relative to the base; the piezoelectric actuator includes a pre-pressing component, a resonator, and a driven member; the driven member is movably connected to the base and is fastened to the carrier; the resonator is fastened to the pre-pressing component, the pre-pressing component is fastened to the base, the pre-pressing component is configured to press a driving foot of the resonator against the driven member, and the resonator is configured to drive, when being powered on, the driven member to drive the carrier to move in the first direction relative to the base; and the driven member has a first connecting surface, the carrier has a second connecting surface, and the first connecting surface is connected to the second connecting surface through magnetic attraction.

It may be understood that, the pre-pressing component may be configured to provide the resonator with a pre-pressing force for abutting against the driven member, so that the resonator can closely abut against the driven member under an action of the pre-pressing force, thereby helping transfer a macro displacement generated through micro vibration of the resonator to the driven member.

It may be understood that the first connecting surface is connected to the second connecting surface through magnetic attraction, the driven member can be connected to the carrier, and the piezoelectric actuator can control the carrier to move in the first direction relative to the base, to implement focusing of the camera module. In this implementation, the piezoelectric actuator can drive the carrier to move. Therefore, the motor in this implementation is not a moving-magnet motor or a moving-coil motor. In this way, electromagnetic interference between a plurality of different magnets can be avoided. Because a size of the motor does not need to be increased to free up space for avoiding magnetic interference, a problem of a large size of the motor can be avoided, and this helps implement miniaturization of the motor in this implementation.

In a possible implementation, one of at least a part of the first connecting surface and at least a part of the second connecting surface is a curved surface, and the other is a flat surface; or at least a part of the first connecting surface and at least a part of the second connecting surface each are a curved surface.

It may be understood that, one of the at least a part of the first connecting surface and the at least a part of the second connecting surface is a curved surface, and the other is a flat surface; or setting that the at least a part of the first connecting surface and the at least a part of the second connecting surface each are a curved surface, point contact between the first connecting surface and the second connecting surface can be implemented, and a degree-of-freedom limitation between the piezoelectric actuator and the carrier can be decoupled. Point contact between the carrier and the driven member only limits the carrier in the first direction. In this way, when a position of the driven member deviates relative to the base by a large angle, such a deviation is unlikely to be transferred to the carrier through point contact between the carrier and the driven member, the carrier is unlikely to be affected by the driven member, and a position of the carrier is unlikely to deviate relative to the base by a large angle. Therefore, the carrier can stably perform reciprocating motion in the first direction relative to the base, and reliability of the carrier is high.

In a possible implementation, the first connecting surface is an arc surface, and the second connecting surface is a flat surface.

It may be understood that, the first connecting surface is an arc surface, and the second connecting surface is a flat surface, point contact between the first connecting surface and the second connecting surface can be implemented, thereby implementing point contact between the driven member and the carrier. In this way, a position change of the driven member in a direction other than the first direction is unlikely to be transferred to the carrier, and reliability of the carrier is high.

In a possible implementation, the first connecting surface includes a flat surface and an arc surface, the arc surface is connected to the flat surface, the second connecting surface is a flat surface, and the arc surface of the first connecting surface is fastened to the second connecting surface.

It may be understood that, a part of the first connecting surface is an arc surface, and the second connecting surface is a flat surface, point contact between the first connecting surface and the second connecting surface can be implemented, thereby implementing point contact between the magnetic attraction member and the magnetic body, and further implementing point contact between the driven member and the carrier. In this way, the position change of the driven member in the direction other than the first direction is unlikely to be transferred to the carrier, and the carrier is unlikely to move in the direction other than the first direction relative to the base, and reliability of the carrier is high.

In a possible implementation, the carrier includes a carrier body and a magnetic body, the magnetic body is fastened to the carrier body, and the carrier body is movably connected to the base; and the driven member includes a driven member body and a magnetic attraction member, the magnetic attraction member is fastened to the driven member body, the driven member body is movably connected to the base, the magnetic body and the magnetic attraction member are disposed opposite to each other, a surface that is of the magnetic attraction member and that faces the magnetic body is the first connecting surface, and a surface that is of the magnetic body and that faces the magnetic attraction member is the second connecting surface.

It may be understood that the carrier and the driven member can be fastened through point contact, the degree-of-freedom limitation between the piezoelectric actuator and the carrier can be decoupled, and point contact between the carrier and the driven member only limits the carrier in the first direction. In this way, when the position of the driven member deviates relative to the base by a large angle, such a deviation is unlikely to be transferred to the carrier through point contact between the carrier and the driven member, the carrier is unlikely to be affected by the driven member, and the position of the carrier is unlikely to deviate relative to the base by a large angle. Therefore, the carrier can stably perform reciprocating motion in the first direction relative to the base, and reliability of the carrier is high.

In a possible implementation, the carrier body is provided with a first groove, and at least a part of the magnetic body and at least a part of the magnetic attraction member are located in the first groove.

It may be understood that, at least a part of the magnetic body and at least a part of the magnetic attraction member are located in the first groove, space of the motor in a second direction can be fully used, and space utilization of the motor is improved, thereby implementing miniaturization of the motor.

In a possible implementation, the base encloses accommodation space, and at least a part of the carrier is located in the accommodation space; the driven member body includes a first connecting portion and a second connecting portion, the second connecting portion is bent and connected to the first connecting portion and is at least partially located on one side of the first connecting portion, and the magnetic attraction member is fastened to the second connecting portion; and the first connecting portion is located on a side that is of the base and that is away from the carrier body and is slidably connected to the base, and a part of the second connecting portion crosses the base and extends into the accommodation space.

It may be understood that, by disposing the first connecting portion and the second connecting portion on two sides of the base, a movable connection between the driven member and the base and fastening between the driven member and the carrier can be implemented simultaneously. In addition, the second connecting portion extends into the accommodation space, so that space of the motor can be saved, and space utilization of the motor can be improved.

In a possible implementation, the driven member body further includes a first sliding shaft portion and a second sliding shaft portion, and the first sliding shaft portion and the second sliding shaft portion are convexly disposed on a surface that is of the first connecting portion and that faces the second connecting portion; and the base includes a first sliding groove and a second sliding groove, at least a part of the first sliding shaft portion is located in the first sliding groove, and at least a part of the second sliding shaft portion is located in the second sliding groove.

It may be understood that the driven member may be movably connected to the base through the first sliding shaft portion and the second sliding shaft portion. Both the first sliding groove and the second sliding groove extend in the first direction, and the first sliding groove and the second sliding groove may guide the first sliding shaft portion and the second sliding shaft portion, so that the first sliding shaft portion and the second sliding shaft portion can slide in the first direction. Because both the first sliding shaft portion and the second sliding shaft portion are fastened to the second connecting portion, the first sliding shaft portion and the second sliding shaft portion may drive the driven member to perform reciprocating motion relative to the base in the first direction.

In a possible implementation, the motor further includes a first support member and a second support member, and the carrier is movably connected to the base through the first support member and the second support member; the carrier body includes a first support groove and a second support groove that are spaced apart, at least a part of the first support member is located in the first support groove, and at least a part of the second support member is located in the second support groove; and both the first support groove and the second support groove extend in the first direction, both the first support groove and the second support groove are arranged in a second direction, both the first sliding groove and the second sliding groove extend in the first direction, the first sliding groove and the second sliding groove are arranged in a third direction, and the first direction, the second direction, and the third direction are different from each other.

It may be understood that an extension direction of the first support groove and the second support groove may be approximately parallel to an extension direction of the first sliding groove and the second sliding groove. In this way, the carrier and the driven member can move in the first direction together. An arrangement direction of the first support groove and the second support groove may be approximately perpendicular to an arrangement direction of the first sliding groove and the second sliding groove. The first support groove and the second support groove that are connected to the carrier and the first sliding groove and the second sliding groove that are connected to the piezoelectric actuator are independent of each other, and are approximately orthogonally arranged. In this way, motion stability of the carrier and the driven member can be ensured.

In a possible implementation, the first support groove includes a first side wall and a second side wall, the first side wall and the second side wall are disposed opposite to each other and inclined, a distance between the first side wall and the second side wall at an opening of the first support groove is greater than a distance between the first side wall and the second side wall at a bottom of a groove body of the first support groove, and the first support member is in contact with the first side wall and the second side wall; and the first support groove is closer to the piezoelectric actuator than the second support groove.

It may be understood that, the first support groove is disposed on a side close to the piezoelectric actuator, and the piezoelectric actuator may be located on a side on which the carrier closely fits the first support member. In this way, stability of the carrier in a movement process can be improved, and the carrier is not inclined by a large angle, thereby improving reliability of the carrier.

In a possible implementation, a cross section of the first support groove is in a "V" shape or in a trapezoidal shape.

It may be understood that, the first support groove can limit a sliding direction of the first support member, so that the first support member slides relative to the extension direction (namely, the first direction) of the first support groove. This can reduce a probability that the first support member deviates, thereby reducing a probability that the carrier deviates when moving in the first direction.

In a possible implementation, the motor further includes a first magnetic member and a second magnetic member, and the first magnetic member and the second magnetic member are fastened to the carrier; and the first support member is made of a magnetic attraction material, and the first support member and the first magnetic member are disposed opposite to each other.

It may be understood that the carrier can be adsorbed on the first support member based on a magnetic force between the first magnetic member and the first support member. In this way, in a third direction, the carrier can be more closely connected to the first support member through the first magnetic member, to prevent the carrier from being inclined by a large angle or detached in the movement process, thereby improving stability and reliability of the carrier in the movement process. In addition, the carrier is adsorbed on the first support member, and noise generated by the carrier and the first support member is small in a process in which the carrier moves in the first direction relative to the base. Therefore, user experience is better.

In a possible implementation, the motor further includes a first magnetic member and a second magnetic member, and the first magnetic member and the second magnetic member are fastened to the carrier; and the second support member is made of a magnetic attraction material, and the second support member and the second magnetic member are disposed opposite to each other.

It may be understood that the carrier can be adsorbed on the second support member based on a magnetic force between the second magnetic member and the second support member. In this way, in the third direction, the carrier can be more closely connected to the second support member through the second magnetic member, to prevent the carrier from being inclined by a large angle or detached in the movement process, thereby improving stability and reliability of the carrier in the movement process. In addition, the carrier is adsorbed on the second support member, and noise generated by the carrier and the second support member is small in a process in which the carrier moves in the first direction relative to the base. Therefore, user experience is better.

In a possible implementation, a first boss and a second boss that are spaced apart are convexly disposed on a surface of the first sliding shaft portion, and the first boss and the second boss abut against the first sliding groove; and a third boss is convexly disposed on a surface of the second sliding shaft portion, and the third boss abuts against the second sliding groove.

It may be understood that, the base and the first sliding shaft portion are in contact through the first boss and the second boss, and the base and the second sliding shaft portion are in contact through the third boss. In such a three-point contact manner, the base is connected to the first sliding shaft portion and the second sliding shaft portion more stably, thereby improving stability of movement of the driven member in the first direction relative to the base, and improving stability of movement of the carrier in the first direction relative to the base.

In a possible implementation, a cross section of the first sliding shaft portion and a cross section of the second sliding shaft portion are in a semicircular shape.

It may be understood that, because both the cross section of the first sliding shaft portion and the cross section of the second sliding shaft portion may be approximately in a semicircular shape, in a process in which the driven member moves relative to the base, noise generated between the first sliding shaft portion, the second sliding shaft portion, and the base is small, and user experience is better. In addition, compared with a sliding shaft whose cross section is approximately in a circular shape, the first sliding shaft portion and the second sliding shaft portion whose cross sections are approximately in a semicircular shape occupy smaller space in the second direction, and reliability of the first sliding shaft portion and the second sliding shaft portion is unlikely to be affected, thereby facilitating miniaturization of the piezoelectric actuator and the motor.

In a possible implementation, the first connecting portion of the driven member is provided with a friction groove, and the driving foot of the resonator is located in the friction groove and is in contact with a groove wall of the friction groove.

It may be understood that, the driving foot of the resonator can rub against the groove wall of the friction groove, to generate an action force in the first direction, and drive the driven member to move in the first direction relative to the resonator.

In a possible implementation, a first wear-resistant layer is disposed on a surface of the driving foot of the resonator, and a material of the first wear-resistant layer includes a nitride.

It may be understood that hardness of stainless steel and the nitride is large, and hardness of the first wear-resistant layer is also large, so that hardness of the surface of the driving foot can be improved. In this way, in a process of friction between the driving foot and the driven member, the driving foot is unlikely to wear or drop chips, a dark spot or a dark shadow is unlikely to appear in an image or a video captured by the camera module, and imaging quality of the camera module is high.

In a possible implementation, the groove wall of the friction groove is provided with a second wear-resistant layer, and a material of the second wear-resistant layer includes a nitride.

It may be understood that hardness of the stainless steel is large, and hardness of the second wear-resistant layer is also large, so that hardness of the groove wall of the friction groove of the driven member can be improved. In this way, in a process of friction between the driving foot and the driven member, the driven member is unlikely to wear or drop chips, a dark spot or a dark shadow is unlikely to appear in an image or a video captured by the camera module, and imaging quality of the camera module is high.

In a possible implementation, the groove wall of the friction groove is provided with a ceramic layer, the driving foot of the resonator is in contact with the ceramic layer, and a thickness T of the ceramic layer meets T≥0.05 mm.

It may be understood that, the thickness T of the ceramic layer is set to be in a range greater than or equal to 0.05 mm, the thickness of the ceramic layer is large, and the hardness of the ceramic layer is also large, so that hardness of the groove wall of the friction groove of the driven member can be improved. In this way, in a process of friction between the driving foot and the driven member, the driven member is unlikely to wear or drop chips, a dark spot or a dark shadow is unlikely to appear in an image or a video captured by the camera module, and imaging quality of the camera module is high.

In a possible implementation, the pre-pressing component includes a bracket and a pressure pin, the bracket includes a first end, a middle portion, and a second end that are connected in sequence, and the resonator is fastened to the middle portion of the bracket; and the first end of the bracket is fastened to the base, the pressure pin is fastened to the base, and the second end of the bracket is fastened to the base.

It may be understood that, the pressure pin fastens the second end of the bracket to the base, and the pressure pin can limit the bracket, thereby preventing a spring plate from being inelastically deformed.

In a possible implementation, the base is provided with a first limiting groove, and the first end of the bracket is fastened to the first limiting groove.

It may be understood that the base may limit the bracket in the third direction, the bracket is unlikely to be detached from the base, and reliability of the bracket is better. When the driven member moves relative to the base, the bracket may provide the resonator with a stable pre-pressing force, so that the driving foot of the resonator can closely abut against the driven member, and the resonator is connected to the driven member more reliably.

In a possible implementation, the base is provided with a second limiting groove, and the second end of the bracket is fastened to the second limiting groove.

It may be understood that the base may limit the bracket in the third direction, the bracket is unlikely to be detached from the base, and reliability of the bracket is better. When the driven member moves relative to the base, the bracket may provide the resonator with a stable pre-pressing force, so that the driving foot of the resonator can closely abut against the driven member, and the resonator is connected to the driven member more reliably.

In a possible implementation, the pre-pressing component further includes a spring plate, a first end and a second end of the spring plate are fastened to the base, and a middle portion of the spring plate is fastened to the first end of the bracket.

It may be understood that the spring plate elastically fastens the first end of the bracket to the base, and a reverse K value of the spring plate is small, to avoid a large pre-pressing force variation of the spring plate.

In a possible implementation, a cross section of the pressure pin is in a circular shape, a semicircular shape, or a polygonal shape.

It may be understood that, when the cross section of the pressure pin is in a circular shape or a semicircular shape, contact between the pressure pin and the bracket is line contact. This can improve anti-torsion stability of the bracket. In this way, the pre-pressing component can provide the driving foot of the resonator with a pre-pressing force for a squeeze toward the driven member, and the resonator can closely abut against the driven member under an action of the pre-pressing force, thereby helping ensure a transfer of a macro displacement generated through micro vibration of the resonator to the driven member. In addition, because contact between the pressure pin and the bracket is line contact, the bracket has a strong anti-swing capability, so that output force fluctuation and noise caused by swinging of the bracket can be avoided, and user experience is better.

It may be understood that, when the cross section of the pressure pin is in a polygonal shape, contact between the pressure pin and the bracket is surface contact. This can improve anti-torsion stability of the bracket. In this way, the pre-pressing component can provide the driving foot of the resonator with a pre-pressing force for a squeeze toward the driven member, and the resonator can closely abut against the driven member under an action of the pre-pressing force, thereby helping ensure a transfer of a macro displacement generated through micro vibration of the resonator to the driven member.

In a possible implementation, the resonator includes an elastomer, the driving foot, a first piezoelectric ceramic, and a second piezoelectric ceramic, and the elastomer is fastened to the pre-pressing component; and the elastomer includes a first surface and a second surface that are disposed facing away from each other, the first surface is disposed facing the driven member, the driving foot is fastened to the first surface, and the first piezoelectric ceramic and the second piezoelectric ceramic are spaced apart and fastened to the second surface.

It may be understood that the pre-pressing component may fasten and support the elastomer. The first piezoelectric ceramic and the second piezoelectric ceramic may be deformed when being powered on, and the elastomer may convert such a deformation into a macro displacement.

In a possible implementation, the motor further includes a circuit board assembly, the circuit board assembly includes a main circuit board, a position sensor, and a third magnetic member, and the third magnetic member is fastened to the carrier; the position sensor is fastened to the main circuit board, and is electrically connected to the main circuit board; and the main circuit board is fastened to the base, and is located on a side that is of the base and that is away from the piezoelectric actuator, and the position sensor and the third magnetic member are disposed opposite to each other.

It may be understood that, the position sensor may detect a change in a magnetic field of the third magnetic member, and a processor may obtain a real-time position of the carrier based on a detection result of the position sensor. In this way, a displacement amount of the carrier can be accurately controlled, closed-loop control on the carrier is implemented, and reliability of the carrier is high.

In a possible implementation, the piezoelectric actuator further includes a first circuit board and a second circuit board, the first circuit board is fastened to and electrically connected to the first piezoelectric ceramic, and the second circuit board is fastened to and electrically connected to the second piezoelectric ceramic; the base includes a base body, a first electrical connection terminal, a second electrical connection terminal, a third electrical connection terminal, a fourth electrical connection terminal, a first trace, and a second trace; the first electrical connection terminal, the second electrical connection terminal, the third electrical connection terminal, and the fourth electrical connection terminal are spaced apart and fastened to the base body, and are exposed out of the base body, the first electrical connection terminal and the second electrical connection terminal are respectively electrically connected to the first circuit board and the second circuit board, and the third electrical connection terminal and the fourth electrical connection terminal are electrically connected to the main circuit board; and the first trace and the second trace are embedded in the base body, the first trace is electrically connected to the first electrical connection terminal and the third electrical connection terminal, and the second trace is electrically connected to the second electrical connection terminal and the fourth electrical connection terminal.

It may be understood that, the piezoelectric actuator may be electrically connected to the circuit board assembly through the base, and the piezoelectric actuator can be electrically connected without being provided with an additional structural member. This helps reduce a quantity of structural members of the motor, thereby helping implement miniaturization of the motor.

In a possible implementation, the circuit board assembly further includes an electronic component, and the electronic component is fastened to the main circuit board and is located on a side that is of the main circuit board and that is away from the base; and the base has an anti-collision protrusion, and a height of the anti-collision protrusion is greater than a height of the electronic component.

It may be understood that, because a height of the anti-collision protrusion in the second direction is greater than a height of the electronic component in the second direction, the anti-collision protrusion may protect the electronic component. Another component is more likely to collide with the anti-collision protrusion than the electronic component, the electronic component is unlikely to collide with the another component, the electronic component is unlikely to be faulty or even damaged due to a collision, and reliability of the electronic component and the circuit board assembly is high.

In a possible implementation, the motor further includes a first dust-capturing adhesive, and the first dust-capturing adhesive is fastened to the driven member and is located on a side that is of the driven member and that is close to the resonator.

It may be understood that, the first dust-capturing adhesive may capture a chip generated through friction between the driving foot of the resonator and the driven member, to prevent the chip from falling on a lens, thereby avoiding a case in which a dark spot or a dark shadow appears in an image captured by the camera module, and improving imaging quality of the camera module.

In a possible implementation, the base includes a bottom plate, a first side plate, a second side plate, a third side plate, and a fourth side plate, and the first side plate, the second side plate, the third side plate, and the fourth side plate are located on a same side of the bottom plate, and are fastened to the bottom plate; and the motor further includes a second dust-capturing adhesive, and the second dust-capturing adhesive is fastened to the bottom plate and is located on a side that is of the bottom plate and that is close to the first side plate.

It may be understood that, the second dust-capturing adhesive may capture a chip generated through friction between the driving foot of the resonator and the driven member, to prevent the chip from falling on a lens, thereby avoiding a case in which a dark spot or a dark shadow appears in an image captured by the camera module, and improving imaging quality of the camera module.

In a possible implementation, the motor further includes a housing and a third dust-capturing adhesive, and the third dust-capturing adhesive is fastened to the housing; the housing includes a top, a first side portion, a second side portion, a third side portion, and a fourth side portion, and the first side portion, the second side portion, the third side portion, and the fourth side portion are located on the same side of the top and are fastened to the top; and the housing covers the base, and the third dust-capturing adhesive is fastened to the top and is located on a side that is of the top and that is close to the base.

It may be understood that, the third dust-capturing adhesive may capture a chip generated through friction between the driving foot of the resonator and the driven member, to prevent the chip from falling on a lens, thereby avoiding a case in which a dark spot or a dark shadow appears in an image captured by the camera module, and improving imaging quality of the camera module.

According to a second aspect, this application provides a camera module. The camera module includes a lens and the foregoing motor, and the lens is fastened to a carrier.

It may be understood that the camera module can be miniaturized and has high reliability.

According to a third aspect, this application provides an electronic device. The electronic device includes a housing and the foregoing camera module, and the camera module is disposed in the housing.

It may be understood that the camera module of the electronic device can be miniaturized and has high reliability.

### BRIEF DESCRIPTION OF DRAWINGS

FIG. 1 is a diagram of a structure of an electronic device according to an implementation of this application;
FIG. 2 is a partial sectional view of an implementation of the electronic device shown in FIG. 1 at a line A-A;
FIG. 3 is a diagram of a partial structure of a focus assembly shown in FIG. 2 in an implementation;
FIG. 4 is a partial exploded view 1 of a motor shown in FIG. 3 in an implementation;
FIG. 5 is a diagram of a structure of a base shown in FIG. 4 in an implementation;
FIG. 6 is a diagram of a structure of the base shown in FIG. 5 at another angle;
FIG. 7 is a partial exploded view of the base shown in FIG. 5 in an implementation;
FIG. 8 is a diagram of a structure of a carrier shown in FIG. 4 in an implementation;
FIG. 9 is a diagram of a structure of the carrier shown in FIG. 8 at another angle;
FIG. 10 is a partial exploded view of the carrier shown in FIG. 8 in an implementation;
FIG. 11 is a partial sectional view of an implementation of the carrier shown in FIG. 8 at a line B-B;
FIG. 12 is a partial exploded view 2 of a motor shown in FIG. 3 in an implementation;
FIG. 13 is a diagram 1 of a partial structure of a motor shown in FIG. 3 in an implementation;
FIG. 14 is a partial sectional view of an implementation of the motor shown in FIG. 13 at a line C-C;
FIG. 15 is a partial exploded view of the motor shown in FIG. 13 at another angle;
FIG. 16 is a partial exploded view of a piezoelectric actuator shown in FIG. 4 in an implementation;
FIG. 17 is a diagram of a structure of a driven member shown in FIG. 16 at another angle;
FIG. 18 is a partial exploded view of the driven member shown in FIG. 17 in an implementation;
FIG. 19A is a partial exploded view 3 of a motor shown in FIG. 3 in an implementation;
FIG. 19B is a diagram 2 of a partial structure of a motor shown in FIG. 3 in an implementation;
FIG. 20A is a partial sectional view of an implementation of the motor shown in FIG. 19B at a line D-D;
FIG. 20B is an enlarged diagram of a structure of an implementation of the motor shown in FIG. 20A at a location E;
FIG. 21 is a partial sectional view of an implementation of the motor shown in FIG. 19B at a line F-F;
FIG. 22A is a partial sectional view of another implementation of the motor shown in FIG. 19B at a line D-D;
FIG. 22B is an enlarged diagram of a structure of an implementation of the motor shown in FIG. 22A at a location G;
FIG. 23 is a diagram of a structure of a resonator shown in FIG. 16 in an implementation;
FIG. 24 is a partial exploded view of an implementation of the resonator shown in FIG. 23;
FIG. 25 is a diagram of a partial structure of a pre-pressing component shown in FIG. 16 in an implementation;
FIG. 26 is a partial exploded view of the pre-pressing component shown in FIG. 25 in an implementation;
FIG. 27 is a diagram of a partial structure of a piezoelectric actuator shown in FIG. 4 in an implementation;
FIG. 28 is a diagram of a partial structure of a piezoelectric actuator shown in FIG. 4 in an implementation;
FIG. 29 is a partial exploded view 4 of a motor shown in FIG. 3 in an implementation;
FIG. 30 is a partial exploded view 5 of a motor shown in FIG. 3 in an implementation;
FIG. 31 is a diagram 3 of a partial structure of a motor shown in FIG. 3 in an implementation;
FIG. 32 is a partial sectional view of an implementation of the motor shown in FIG. 31 at a line H-H;
FIG. 33A is a partial sectional view of an implementation of a piezoelectric actuator shown in FIG. 4 at a line I-I;
FIG. 33B is an enlarged diagram of a structure of an implementation of the piezoelectric actuator shown in FIG. 33A at a location J;
FIG. 34A is a partial sectional view of another implementation of a piezoelectric actuator shown in FIG. 4 at a line I-I;
FIG. 34B is an enlarged diagram of a structure of an implementation of the piezoelectric actuator shown in FIG. 34A at a location K;
FIG. 35 is a partial sectional view of an implementation of the motor shown in FIG. 31 at a line L-L;
FIG. 36 is a partial sectional view of an implementation of the motor shown in FIG. 31 at a line M-M;
FIG. 37 is a partial sectional view of another implementation of the motor shown in FIG. 31 at a line M-M;
FIG. 38 is a diagram of a structure of the motor shown in FIG. 31 at another angle;
FIG. 39 is a partial exploded view of the motor shown in FIG. 38 in an implementation;
FIG. 40 is a diagram of a partial structure of a circuit board assembly shown in FIG. 4 at another angle;
FIG. 41 is a diagram of a partial structure of the circuit board assembly shown in FIG. 40 at another angle;
FIG. 42 is a diagram 4 of a partial structure of a motor shown in FIG. 3 in an implementation;
FIG. 43 is a partial sectional view of an implementation of the motor shown in FIG. 42 at a line N-N;
FIG. 44 is a diagram of a partial structure of the motor shown in FIG. 4 in an implementation;
FIG. 45A is a partial sectional view of an implementation of a motor shown in FIG. 3 at a line O-O;
FIG. 45B is an enlarged diagram of a structure of an implementation of the motor shown in FIG. 45A at a location P;
FIG. 46 is a diagram of a partial structure of a housing shown in FIG. 4 in an implementation;
FIG. 47 is a diagram of a partial structure of a motor shown in FIG. 3 at another angle;
FIG. 48A is a partial sectional view of an implementation of a motor shown in FIG. 3 at a line Q-Q; and
FIG. 48B is an enlarged diagram of a structure of an implementation of the motor shown in FIG. 48A at a location R.

### DESCRIPTION OF EMBODIMENTS

The following clearly describes technical solutions in implementations of this application with reference to the accompanying drawings in implementations of this application.

In the descriptions of this application, it should be noted that, unless otherwise specified and limited, the terms "mounting", "connect", "connecting", and "connection" should be understood in a broad sense. For example, the "connection" may be a detachable connection or a non-detachable connection, or may be a direct connection or an indirect connection through an intermediate medium, or may be an electrical connection or a mechanical connection. "Fastened" means a connection to each other with an unchanged relative position relationship. "Movably connected" means that two parts are connected to each other and can move relative to each other after the two parts are connected to each other. "Slidably connected" means that two parts are connected to each other and can slide relative to each other after the two parts are connected to each other. In addition, obtaining an integrated structure of two parts through an integral forming process means that, in a process of forming one of the two parts, the part is connected to the other part, and the two parts do not need to be connected through reprocessing (for example, bonding, welding, snap-fit connection, or screwing). That a part A and a part B are disposed opposite to each other may be as follows: The part A is projected in a target direction to obtain a projection C, the part B is projected in a target direction to obtain a projection D, and the projection C and the projection D may at least largely overlap. In some embodiments, largely overlapping may be any one of the following cases: The projection C is completely located in the projection D; or the projection D is completely located in the projection C; or the projection C and the projection D cross each other, and a proportion of a cross area of the projection C and the projection D to the projection C or the projection D is greater than 50%.

Orientation terms mentioned in embodiments of this application, for example, "top", "bottom", "inner", and "outer", merely indicate directions with reference to accompanying drawings. Therefore, the orientation terms are used to better and more clearly describe and understand implementations of this application, but do not indicate or imply that a specified apparatus or element needs to have a specific orientation or be constructed or operated in a specific orientation. Therefore, this cannot be understood as a limitation on implementations of this application. A person of ordinary skill in the art may understand specific meanings of the foregoing terms based on specific cases.

In this specification and the claims of this application, the terms "first", "second", and the like are intended to distinguish between similar objects but do not indicate a specific order or sequence. It should be understood that data used in this way may be interchangeable in a proper case, so that implementations of this application can be implemented in a sequence other than those shown or described herein. Objects distinguished by "first" and "second" are usually of one type, and a quantity of objects is not limited. For example, there may be one first objects, or may be a plurality of first objects. In addition, in this specification and the claims, "and/or" indicates at least one of connected objects, and the character "/" usually indicates an "or" relationship between associated objects. "A plurality of" means at least two.

In addition, in embodiments of this application, a limitation on a relative position relationship is mentioned, for example, parallel or vertical. These limitations are all relative to the current process level, and are not absolutely strict. A small deviation is allowed, for example, approximate parallel or vertical is acceptable. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

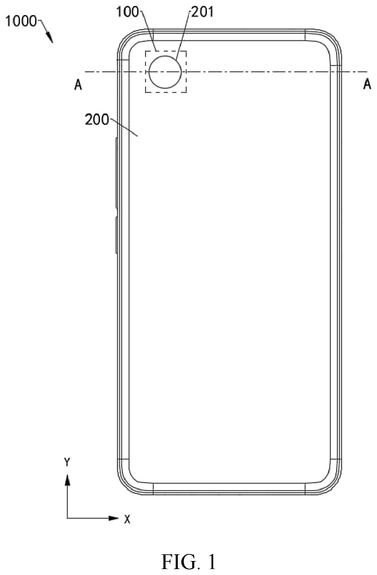

FIG. 1 is a diagram of a structure of an electronic device 1000 according to an implementation of this application.

As shown in FIG. 1, the electronic device 1000 may be a device having a camera module, for example, a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet.

It may be understood that, for ease of description, it is defined in the following that the electronic device 1000 has a first direction X, a second direction Y, and a third direction Z, and the first direction X, the second direction Y, and the third direction Z are different from each other. For example, the first direction X may be a width direction of the electronic device 1000, the second direction Y may be a height direction of the electronic device 1000, the first direction X may be approximately perpendicular to the second direction Y, and the third direction Z may be a thickness direction of the electronic device 1000. The third direction Z may be approximately perpendicular to the first direction X and the second direction Y. In another implementation, a coordinate system of the electronic device 1000 may be flexibly set according to a specific actual requirement.

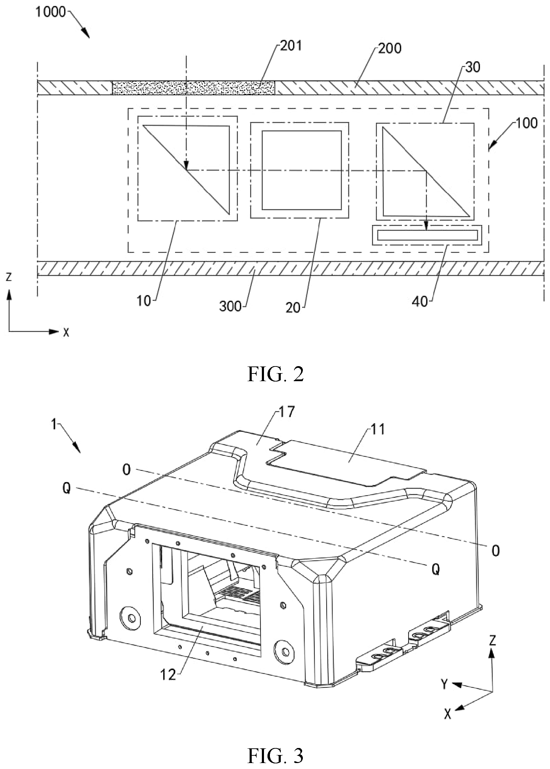

FIG. 2 is a partial sectional view of an implementation of the electronic device 1000 shown in FIG. 1 at a line A-A.

As shown in FIG. 1 and FIG. 2, in some implementations, the electronic device 1000 may include a camera module 100, a housing 200, and a screen 300. The camera module 100 may be a rear-facing camera module 100, or may be a front-facing camera module 100. It should be understood that FIG. 1, FIG. 2, and related accompanying drawings in the following descriptions merely show some parts included in the electronic device 1000 as an example. Actual shapes, actual sizes, actual positions, and actual structures of the parts are not limited by FIG. 1, FIG. 2, or the accompanying drawings in the following descriptions. In addition, the electronic device 1000 may include more or fewer structures. For example, when the electronic device 1000 includes more structures, the electronic device 1000 may further include a vapor chamber (not shown in the figure). When the electronic device 1000 includes fewer structures, the electronic device 1000 may alternatively not include the screen.

As shown in FIG. 1 and FIG. 2, in some embodiments, the screen 300 is mounted on the housing 200, and encloses the inside of the electronic device 1000 together with the housing 200. The inside of the electronic device 1000 may be used for placing a component, for example, a battery, a receiver, or a microphone, of the electronic device 1000. The screen 300 may be a flat screen or a curved screen.

For example, the camera module 100 may be disposed in the housing 200. The housing 200 has a light transmission portion 201. A shape of the light transmission portion 201 is not limited to a circular shape shown in FIG. 1, and may alternatively be an elliptic shape or an irregular shape. Light outside the electronic device 1000 may enter the electronic device 1000 through the light transmission portion 201. The camera module 100 may capture light that enters the electronic device 1000. The light transmission portion 201 may be a light transmission hole, or may be a transparent portion in the housing 200. A specific structure of the light transmission portion 201 is not specifically limited in this application.

As shown in FIG. 2, for example, the camera module 100 includes a first folding element 10, a focus assembly 20, a second folding element 30, and an image sensor 40 that are sequentially arranged from an object side to an image side. In another implementation, the camera module 100 may further include more or fewer structures. For example, when the camera module 100 includes more structures, the camera module 100 may further include a light filter (not shown in the figure). When the camera module 100 includes fewer structures, the camera module 100 may not include the second folding element 30.

For example, the image sensor 40 is a semiconductor chip, and may also be referred to as a photosensitive chip. There are hundreds of thousands to millions of photodiodes on a surface of the image sensor 40, and the photodiodes generate charges when exposed to light. The image sensor 40 converts, based on a photoelectric conversion function of the photoelectric device, an optical image on a photosensitive surface of the image sensor 40 into an electrical signal that is in a corresponding proportion relationship with the optical image. The photosensitive surface of the image sensor 40 may be disposed facing the second folding element 30. The image sensor 40 may be a charge coupled device, a complementary metal-oxide-semiconductor, a phototransistor, a thin film transistor, or the like. In another implementation, the image sensor 40 may alternatively be a part of another structure.

For example, the image sensor 40 may be located on an image side of the focus assembly 20. The light may sequentially pass through the first folding element 10, the focus assembly 20, and the second folding element 30, and then arrive at the image sensor 40, to implement imaging.

FIG. 3 is a diagram of a partial structure of a focus assembly 20 shown in FIG. 2 in an implementation.

As shown in FIG. 2 and FIG. 3, for example, the focus assembly 20 may include a motor 1 and a lens (not shown in the figure), and the lens may be mounted on the motor 1. The motor 1 may drive the lens to move in the first direction X, to implement focusing (Auto Focus, AF) of the camera module 100, and improve imaging quality of the camera module 100.

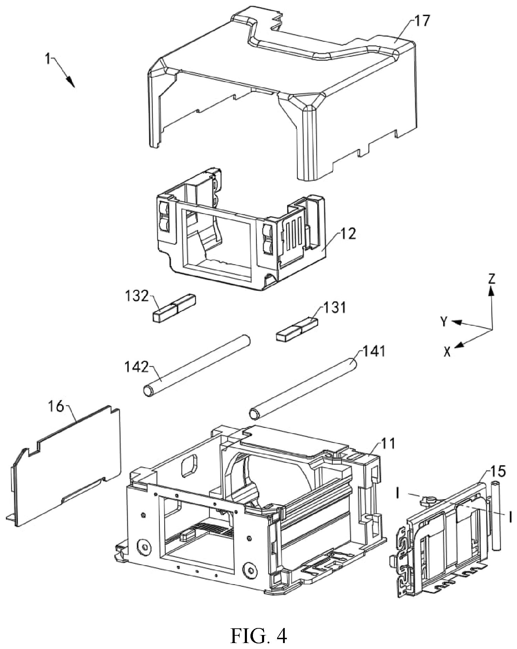

FIG. 4 is a partial exploded view 1 of a motor 1 shown in FIG. 3 in an implementation.

As shown in FIG. 3 and FIG. 4, for example, the motor 1 may include a base 11, a carrier 12, a first magnetic member 131, a second magnetic member 132, a first support member 141, a second support member 142, a piezoelectric actuator 15, a circuit board assembly 16, and a housing 17. It may be understood that FIG. 4 shows only an example of some parts included in the motor 1, and actual shapes, actual sizes, actual positions, and actual construction of these parts are not limited in FIG. 4. The motor 1 may include more or fewer structures. For example, when the motor 1 includes fewer structures, the motor 1 may not include the housing 17.

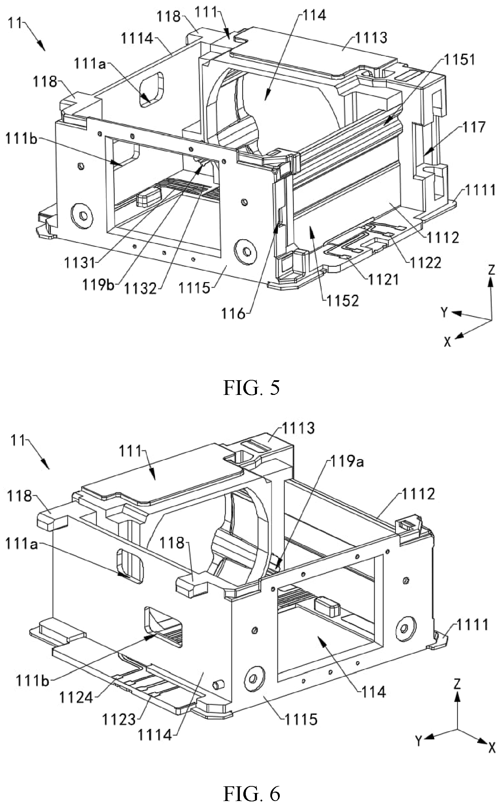

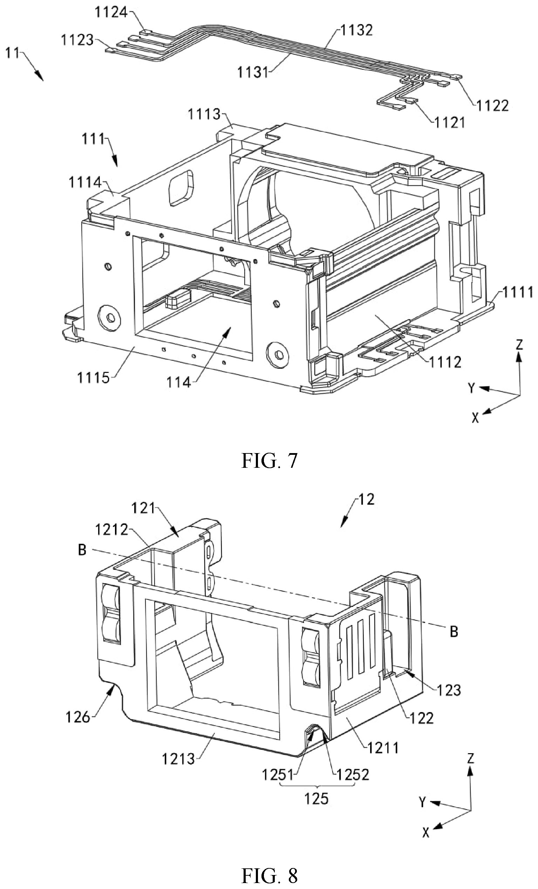

FIG. 5 is a diagram of a structure of a base 11 shown in FIG. 4 in an implementation. FIG. 6 is a diagram of a structure of the base 11 shown in FIG. 5 at another angle. FIG. 7 is a partial exploded view of the base 11 shown in FIG. 5 in an implementation.

As shown in FIG. 5 to FIG. 7, for example, the base 11 may include a base body 111, a first electrical connection terminal 1121, a second electrical connection terminal 1122, a third electrical connection terminal 1123, a fourth electrical connection terminal 1124, a first trace 1131, and a second trace 1132. It should be understood that FIG. 5 and related accompanying drawings in the following descriptions merely show some parts included in the base 11 as an example. Actual shapes, actual sizes, actual positions, and actual structures of the parts are not limited by FIG. 5 and the accompanying drawings in the following descriptions. In addition, the base 11 may include more or fewer structures.

For example, the first electrical connection terminal 1121, the second electrical connection terminal 1122, the third electrical connection terminal 1123, and the fourth electrical connection terminal 1124 may be spaced apart and fastened to the base body 111, and are exposed out of the base body 111.

For example, the first trace 1131 and the second trace 1132 may be embedded in the base body 111. The first trace 1131 may be electrically connected to the first electrical connection terminal 1121 and the third electrical connection terminal 1123, and the second trace 1132 may be electrically connected to the second electrical connection terminal 1122 and the fourth electrical connection terminal 1124.

As shown in FIG. 5 to FIG. 7, for example, the base body 111 may include a bottom plate 1111, a first side plate 1112, a second side plate 1113, a third side plate 1114, and a fourth side plate 1115.

For example, the first side plate 1112, the second side plate 1113, the third side plate 1114, and the fourth side plate 1115 may be located on a same side of the bottom plate 1111, and are fastened to the bottom plate 1111. The bottom plate 1111, the first side plate 1112, the second side plate 1113, the third side plate 1114, and the fourth side plate 1115 of the base body 111 may enclose accommodation space 114 of the base 11.

For example, the first side plate 1112 and the third side plate 1114 may be disposed opposite to each other and spaced apart, the first side plate 1112 and the third side plate 1114 may be arranged in the second direction Y, and the second side plate 1113 may be connected between the first side plate 1112 and the third side plate 1114. The second side plate 1113 and the fourth side plate 1115 may be disposed opposite to each other and spaced apart, and the second side plate 1113 and the fourth side plate 1115 may be arranged in the first direction X. In another implementation, the base body 111 may alternatively be of another structure.

It may be understood that, to facilitate description of a specific structure and shape of the base body 111, in this implementation, the base body 111 is divided into five parts for description, but this does not affect a fact that the base body 111 may be of an integral structure. To be specific, the bottom plate 1111, the first side plate 1112, the second side plate 1113, the third side plate 1114, and the fourth side plate 1115 may be integrally formed. In another implementation, the base body 111 may alternatively include different independent structural members based on an assembly process. For example, the first side plate 1112, the second side plate 1113, the third side plate 1114, and the fourth side plate 1115 of the base body 111 may be independent structural members, and are fastened to the bottom plate 1111 through bonding, welding, or the like.

As shown in FIG. 5, for example, the base 11 may include a first sliding groove 1151 and a second sliding groove 1152.

For example, the first sliding groove 1151 and the second sliding groove 1152 may be located on the first side plate 1112. Both openings of the first sliding groove 1151 and the second sliding groove 1152 may be disposed facing away from the third side plate 1114.

For example, a cross section of the first sliding groove 1151 may be approximately in a "V" shape. In other words, the first sliding groove 1151 may be a V-shaped groove, and the cross section of the first sliding groove 1151 may be approximately perpendicular to the first direction X. The second sliding groove 1152 may be approximately in a plate shape.

The V-shaped groove in this embodiment of this application means that two opposite side walls of a groove body are inclined. In addition, a distance between the two opposite side walls is large at an opening of the groove body, and the distance is small at a bottom of the groove body, so that a cross section of the groove body is approximately in a "V" shape or in a "trapezoidal" shape. The foregoing is merely an example for describing the V-shaped groove, and does not constitute a limitation on a structure of the V-shaped groove, provided that a groove body of the V-shaped groove is inclined relative to the two side walls, and a spacing between the two side walls at an opening position of the groove body is greater than a spacing between two side walls at a bottom position of the groove body.

In another implementation, the cross section of the first sliding groove 1151 may alternatively be in another shape, and the first sliding groove 1151 may alternatively be another type of groove. A cross section of the second sliding groove 1152 may alternatively be in another shape, and the second sliding groove 1152 may alternatively be another type of groove. This is not specifically limited in this application.

For example, the first sliding groove 1151 and the second sliding groove 1152 may extend in the first direction X. The first sliding groove 1151 and the second sliding groove 1152 may be arranged in the third direction Z. That the first sliding groove 1151 and the second sliding groove 1152 extend in the first direction X means a maximum size of the first sliding groove 1151 and a maximum size of the second sliding groove 1152. For example, a length direction of the first sliding groove 1151 and a length direction of the second sliding groove 1152 may be approximately parallel to the first direction X.

As shown in FIG. 5, for example, the base 11 may be provided with a first limiting groove 116 and a second limiting groove 117.

For example, the first limiting groove 116 may be located at one end that is of the fourth side plate 1115 and that is close to the first side plate 1112, and an opening of the first limiting groove 116 may be disposed facing away from the third side plate 1114. The second limiting groove 117 may be located at an end that is of the second side plate 1113 and that is close to the first side plate 1112, and an opening of the second limiting groove 117 may be disposed facing away from the third side plate 1114.

As shown in FIG. 6, for example, the base 11 may have an anti-collision protrusion 118. In an implementation, the anti-collision protrusion 118 may be located on the third side plate 1114. The anti-collision protrusion 118 may protrude in a direction away from the third side plate 1114 from a surface of the third side plate 1114 in the second direction Y.

For example, there may be a plurality of anti-collision protrusions 118. In an implementation, there may be two anti-collision protrusions 118.

In another implementation, there may alternatively be one anti-collision protrusion 118. This is not specifically limited in this application.

As shown in FIG. 5 and FIG. 6, for example, the second side plate 1113 may be provided with a first through hole 119a and a second through hole 119b.

For example, the first through hole 119a and the second through hole 119b may penetrate the second side plate 1113 in the first direction X. The first through hole 119a and the second through hole 119b may be spaced apart. The first through hole 119a may be located on a side that is of the second through hole 119b and that is close to the first side plate 1112.

As shown in FIG. 5 and FIG. 6, for example, the third side plate 1114 may be provided with a third through hole 111a and a fourth through hole 111b. The third through hole 111a and the fourth through hole 111b may penetrate the third side plate 1114 in the second direction Y.

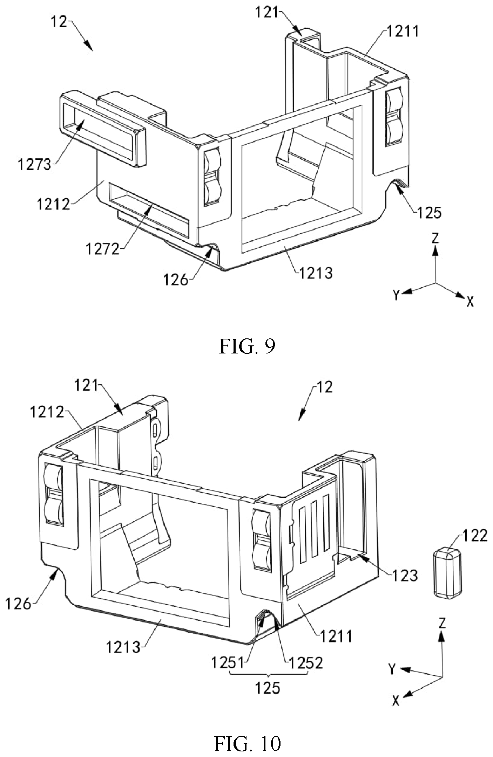

FIG. 8 is a diagram of a structure of a carrier 12 shown in FIG. 4 in an implementation. FIG. 9 is a diagram of a structure of the carrier 12 shown in FIG. 8 at another angle. FIG. 10 is a partial exploded view of the carrier 12 shown in FIG. 8 in an implementation.

As shown in FIG. 8 to FIG. 10, for example, the carrier 12 may include a carrier body 121 and a magnetic body 122. The magnetic body 122 may be fastened to the carrier body 121.

For example, the carrier body 121 may include a first portion 1211, a second portion 1212, and a third portion 1213.

For example, the first portion 1211 and the second portion 1212 may be located on a same side of the third portion 1213, and are fastened to the third portion 1213. The first portion 1211 and the second portion 1212 may be disposed opposite to each other and spaced apart. The first portion 1211 and the second portion 1212 may be arranged in the second direction Y. The third portion 1213 may be located on a same side of the first portion 1211 and the second portion 1212, and is connected between the first portion 1211 and the second portion 1212. In another implementation, the carrier body 121 may alternatively be of another structure.

It may be understood that, to facilitate description of a specific structure and shape of the carrier body 121, the carrier body 121 is divided into three parts for description in this implementation, but this does not affect a fact that the carrier body 121 may be of an integral structure. To be specific, the first portion 1211, the second portion 1212, and the third portion 1213 may be integrally formed. In another implementation, the carrier body 121 may alternatively include different independent structural members based on an assembly process. For example, the first portion 1211 and the second portion 1212 of the carrier body 121 may be two independent structural members, and are fastened to the third portion 1213 through bonding, welding, or the like.

As shown in FIG. 8 and FIG. 10, for example, the carrier body 121 may be provided with a first groove 123. The first groove 123 may be located in the first portion 1211.

For example, at least a part of the magnetic body 122 may be located in the first groove 123, and is fastened to a groove wall of the first groove 123.

As shown in FIG. 8 to FIG. 10, for example, the carrier body 121 may include a first support groove 125 and a second support groove 126 that are spaced apart.

For example, the first support groove 125 may be located in the first portion 1211. An opening of the first support groove 125 may face away from the first groove 123. A cross section of the first support groove 125 may be approximately in "V" shape. In other words, the first support groove 125 may be a V-shaped groove.

For example, the first support groove 125 includes a first side wall 1251 and a second side wall 1252. In an implementation, the first side wall 1251 and the second side wall 1252 are disposed opposite to each other and are inclined, and a distance between the first side wall 1251 and the second side wall 1252 at the opening of the first support groove 125 is greater than a distance between the first side wall 1251 and the second side wall 1252 at a bottom of a groove body of the first support groove 125.

In an implementation, the cross section of the first support groove 125 may be approximately in a trapezoidal shape.

In another implementation, the cross section of the first support groove 125 may alternatively be approximately in another shape. For example, the cross section of the first support groove 125 may alternatively be approximately in a quadrilateral shape. This is not specifically limited in this application.

For example, the second support groove 126 may be located in the second portion 1212. An opening of the second support groove 126 may face away from the first groove 123. A cross section of the second support groove 126 may be approximately in an "L" shape.

For example, the first support groove 125 and the second support groove 126 may extend in the first direction X. The first support groove 125 and the second support groove 126 may be arranged in the second direction Y. That the first support groove 125 and the second support groove 126 extend in the first direction X means a maximum size of the first support groove 125 and a maximum size of the second support groove 126. For example, a length direction of the first support groove 125 and a length direction of the second support groove 126 may be approximately parallel to the first direction X.

For example, the magnetic body 122 may be a magnet or another magnetic part. The magnetic body 122 may be magnetic.

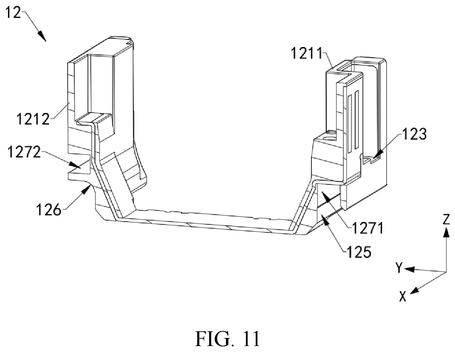

FIG. 11 is a partial sectional view of an implementation of the carrier 12 shown in FIG. 8 at a line B-B.

As shown in FIG. 9 and FIG. 11, the first portion 1211 may be provided with a first mounting groove 1271. The second portion 1212 may be provided with a second mounting groove 1272.

For example, the first mounting groove 1271 may be located on a side that is of the first support groove 125 and that is close to the first groove 123. The first mounting groove 1271 may communicate with the first support groove 125. The second mounting groove 1272 may be located on a side that is of the second support groove 126 and that is close to the first groove 123. An opening of the second mounting groove 1272 may be disposed facing away from the first portion 1211.

As shown in FIG. 9, for example, the second portion 1212 may be provided with a third mounting groove 1273. An opening of the third mounting groove 1273 may be disposed facing away from the first portion 1211.

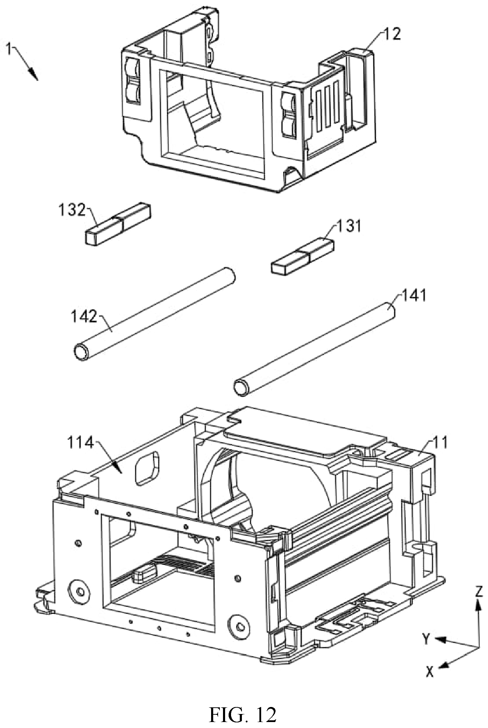

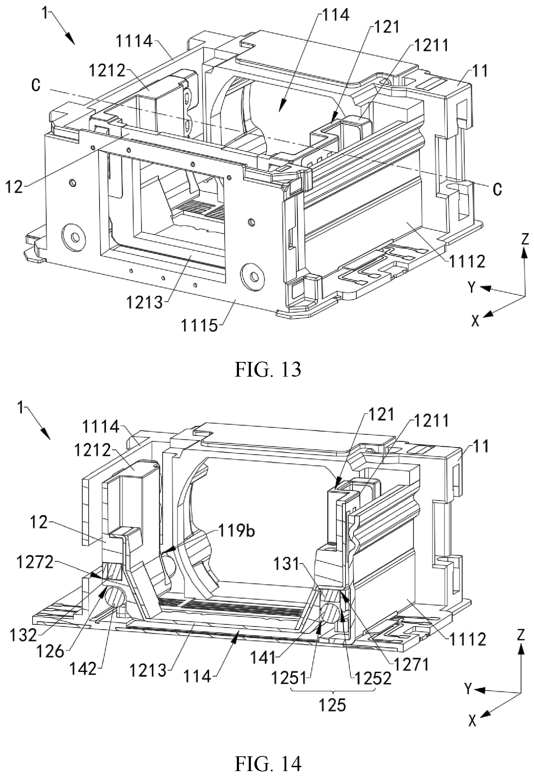

FIG. 12 is a partial exploded view 2 of a motor 1 shown in FIG. 3 in an implementation. FIG. 13 is a diagram of a partial structure of the motor 1 shown in FIG. 3 in an implementation. FIG. 14 is a partial sectional view of an implementation of the motor 1 shown in FIG. 13 at a line C-C.

As shown in FIG. 12 to FIG. 14, the carrier 12 may be movably connected to the base 11, and at least a part of the carrier 12 may be located in the accommodation space 114 of the base 11.

As shown in FIG. 13, for example, the carrier body 121 may be movably connected to the base 11. In an implementation, the first portion 1211 of the carrier body 121 may be disposed opposite to the first side plate 1112 of the base 11, the second portion 1212 may be disposed opposite to the third side plate 1114, and the third portion 1213 may be disposed opposite to the fourth side plate 1115.

As shown in FIG. 14, for example, the carrier 12 may be movably connected to the base 11 through the first support member 141 and the second support member 142.

For example, the first support member 141 may be fastened to the base 11, at least a part of the first support member 141 may be located in the first through hole 119a (as shown in FIG. 6), and the first support member 141 may be fastened to a hole wall of the first through hole 119a through bonding, or the like. The first support member 141 may be movably connected to the carrier 12. At least a part of the first support member 141 may be located in the first support groove 125, and the first support member 141 may abut against the first support groove 125. The first support member 141 may abut against the first side wall 1251 and the second side wall 1252. The first support member 141 and the carrier 12 may be zero-clearance fitted.

For example, the cross section of the first support groove 125 is approximately in a "V" shaped, and the first support member 141 abuts against the two side walls of the first support groove 125. In other words, the first support member 141 is zero-clearance fitted to the two side walls of the first support groove 125.

It may be understood that, the first support groove 125 can limit a sliding direction of the first support member 141, so that the first support member 141 slides relative to the extension direction (namely, the first direction X) of the first support groove 125. This can reduce a probability that the first support member 141 deviates, thereby reducing a probability that the carrier 12 deviates when moving in the first direction X.

For example, the second support member 142 may be fastened to the base 11, at least a part of the second support member 142 may be located in the second through hole 119b, and the second support member 142 may be fastened to a hole wall of the second through hole 119b through bonding, or the like. The second support member 142 may be movably connected to the carrier 12. At least a part of the second support member 142 may be located in the second support groove 126, and the second support member 142 may abut against the second support groove 126. The second support member 142 and the carrier 12 may be loosely fitted.

It may be understood that there is specific movement space between the second support member 142 and the second support groove 126, to reduce a possibility of interference, thereby avoiding a phenomenon that the carrier 12 is stuck when moving in the first direction X.

It may be understood that the carrier 12 is movably connected to the base 11 through the first support member 141 and the second support member 142, and the first support groove 125 and the second support groove 126 may limit a movement direction of the carrier 12, so that the carrier 12 can move in an extension direction of the first support member 141 and the second support member 142, that is, the first direction X, to reduce a probability of a position deviation of the carrier 12 in a movement process. In addition, both a friction force between the carrier 12 and the first support member 141 and a friction force between the carrier 12 and the second support member 142 are small, power required by the carrier 12 is small, and relative motion between the carrier 12 and the base 11 is smooth.

In another implementation, the carrier 12 may alternatively be movably connected to the base 11 in another manner. This is not specifically limited in this application.

As shown in FIG. 14, for example, the first magnetic member 131 may be fastened to the carrier 12. In an implementation, the first magnetic member 131 may be located in the first mounting groove 1271. The first magnetic member 131 may be disposed opposite to the first support member 141.

For example, the first support member 141 may be made of a magnetic attraction material. The magnetic attraction material may be a material that can generate a magnetic attraction force with a magnet or another magnetic part, for example, a ferromagnetic material. It may be understood that, when the magnetic attraction material appears again in the following, the magnetic attraction material represents a same meaning. Details are not described again.

For example, there may be a magnetic force, between the first magnetic member 131 and the first support member 141, that is approximately perpendicular to a length direction (namely, the third direction Z) of the first support member 141, and the first magnetic member 131 and the first support member 141 may adsorb each other.

As shown in FIG. 14, for example, the second magnetic member 132 may be fastened to the carrier 12.

For example, the second magnetic member 132 may be located in the second mounting groove 1272. The second magnetic member 132 may be disposed opposite to the second support member 142.

For example, the second support member 142 may be made of a magnetic attraction material.

For example, there may be a magnetic force, between the second magnetic member 132 and the second support member 142, that is approximately perpendicular to the length direction (namely, the third direction Z) of the first support member 141, and the second magnetic member 132 and the second support member 142 may adsorb each other.

It may be understood that, the magnetic force between the first magnetic member 131 and the first support member 141 and the magnetic force between the second magnetic member 132 and the second support member 142 can adsorb the carrier 12 on the first support member 141 and the second support member 142. In this way, in the third direction Z, the carrier 12 can be more closely connected to the first support member 141 and the second support member 142 through the first magnetic member 131 and the second magnetic member 132, to prevent the carrier 12 from being inclined by a large angle or detached in the movement process, thereby improving stability and reliability of the carrier 12 in the movement process. In addition, by adsorbing the carrier 12 on the first support member 141 and the second support member 142, in a process in which the carrier 12 moves in the first direction X relative to the base 11, noise generated by the carrier 12, the first support member 141, and the second support member 142 is small, and user experience is better.

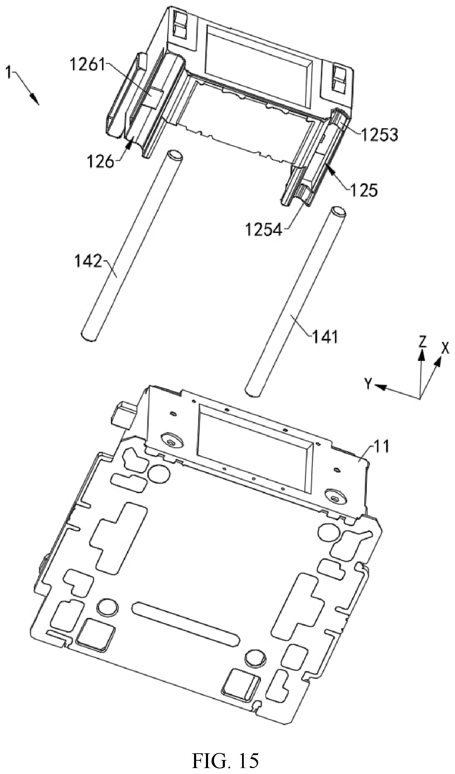

FIG. 15 is a partial exploded view of the motor 1 shown in FIG. 13 at another angle.

As shown in FIG. 15, together with FIG. 14, for example, a first protrusion 1253 and a second protrusion 1254 that are spaced apart may be disposed on a groove wall of the first support groove 125. The first support member 141 may abut against the first protrusion 1253 and the second protrusion 1254.

For example, a third protrusion 1261 may be disposed on a groove wall of the second support groove 126. The second support member 142 may abut against the third protrusion 1261.

It may be understood that, the carrier 12 is in contact with the first support member 141 through the first protrusion 1253 and the second protrusion 1254, and the carrier 12 is in contact with the second support member 142 through the third protrusion 1261. In this way, in such a three-point contact manner, the carrier 12 is connected to the first support member 141 and the second support member 142 more stably, to improve stability of movement of the carrier 12 in the first direction X relative to the base 11, thereby helping improve imaging quality of the camera module 100.

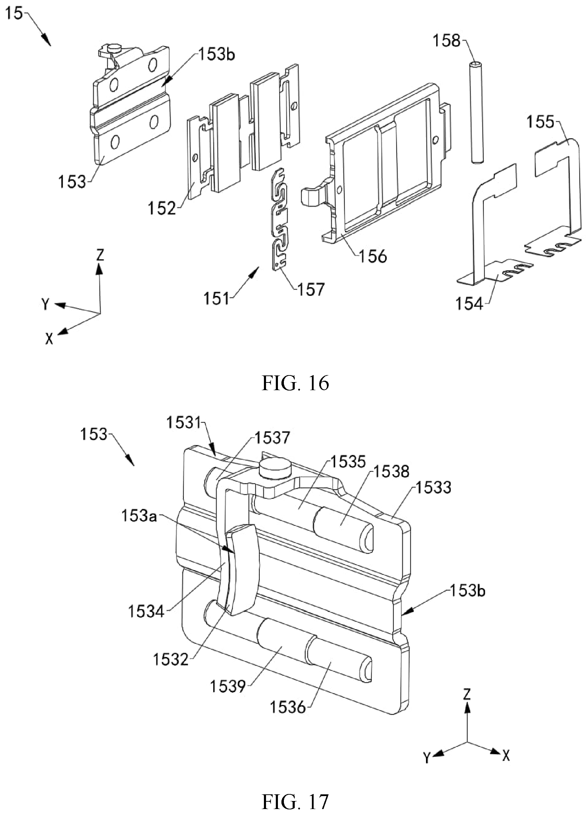

FIG. 16 is a partial exploded view of a piezoelectric actuator 15 shown in FIG. 4 in an implementation.

As shown in FIG. 16, for example, the piezoelectric actuator 15 may include a pre-pressing component 151, a resonator 152, a driven member 153, a first circuit board 154, and a second circuit board 155. It should be understood that FIG. 16 and accompanying drawings in the following descriptions merely show some parts included in the piezoelectric actuator 15 as an example. Actual shapes, actual sizes, actual positions, and actual structures of the parts are not limited by FIG. 16 and the accompanying drawings in the following descriptions. For example, the piezoelectric actuator 15 may include more or fewer structures.

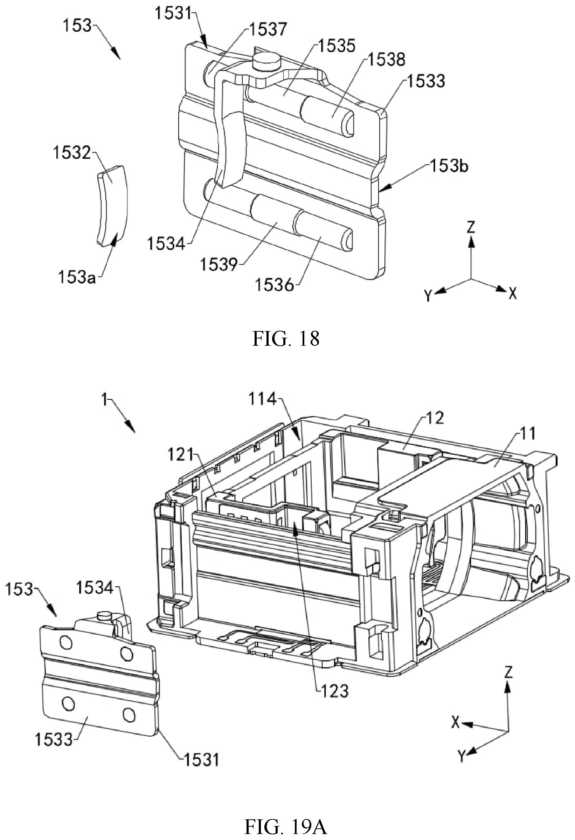

FIG. 17 is a diagram of a structure of a driven member 153 shown in FIG. 16 at another angle. FIG. 18 is a partial exploded view of the driven member 153 shown in FIG. 17 in an implementation.

As shown in FIG. 17 and FIG. 18, for example, the driven member 153 may include a driven member body 1531 and a magnetic attraction member 1532. The magnetic attraction member 1532 may be fastened to the driven member body 1531. A material of the driven member body 1531 may include stainless steel.

In another implementation, the material of the driven member body 1531 may alternatively include another material. This is not specifically limited in this application.

For example, the driven member body 1531 may include a first connecting portion 1533 and a second connecting portion 1534.

For example, the second connecting portion 1534 may be bent and connected to the first connecting portion 1533, and may be at least partially located on one side of the first connecting portion 1533.

It may be understood that, to facilitate description of a specific structure and shape of the driven member body 1531, the driven member body 1531 is divided into two parts for description in this implementation, but this does not affect a fact that the driven member body 1531 may be of an integral structure. To be specific, the first connecting portion 1533 and the second connecting portion 1534 may be integrally formed. In another implementation, the driven member body 1531 may alternatively include different independent structural members based on an assembly process. For example, the first connecting portion 1533 and the second connecting portion 1534 of the driven member body 1531 may be two independent structural members, and are fastened through bonding, welding, or the like.

For example, the magnetic attraction member 1532 may be made of a magnetic attraction material.

As shown in FIG. 17, for example, the magnetic attraction member 1532 may be fastened to the second connecting portion 1534 of the driven member body 1531. In an implementation, the magnetic attraction member 1532 may be fastened to the second connecting portion 1534 through bonding, or the like.

In another implementation, the magnetic attraction member 1532 may alternatively be fastened to the second connecting portion 1534 in another manner. This is not specifically limited in this application.

For example, the driven member 153 may have a first connecting surface 153a. In an implementation, the first connecting surface 153a may be located on a surface of the magnetic attraction member 1532.

As shown in FIG. 17 and FIG. 18, for example, the driven member body 1531 may further include a first sliding shaft portion 1535 and a second sliding shaft portion 1536.

For example, the first sliding shaft portion 1535 and the second sliding shaft portion 1536 may be convexly disposed on a surface that is of the first connecting portion 1533 and that faces the second connecting portion 1534, and are fastened to the first connecting portion 1533.

For example, the first sliding shaft portion 1535 and the second sliding shaft portion 1536 may be two independent structural members, and are fastened to the first connecting portion 1533 through bonding, welding, or the like.

In another implementation, the first sliding shaft portion 1535, the second sliding shaft portion 1536, and the first connecting portion 1533 may alternatively be of an integral structure. This is not specifically limited in this application.

For example, a cross section of the first sliding shaft portion 1535 and a cross section of the second sliding shaft portion 1536 may be approximately in a semicircular shape.

It may be understood that, compared with a sliding shaft whose cross section is approximately in a circular shape, the first sliding shaft portion 1535 and the second sliding shaft portion 1536 whose cross sections are approximately in a semicircular shape occupy smaller space in the second direction Y, and reliability of the first sliding shaft portion 1535 and the second sliding shaft portion 1536 is unlikely to be affected, thereby facilitating miniaturization of the piezoelectric actuator 15 and the motor 1.

As shown in FIG. 17 and FIG. 18, for example, a first boss 1537 and a second boss 1538 that are spaced apart may be convexly disposed on a surface of the first sliding shaft portion 1535. A third boss 1539 may be convexly disposed on a surface of the second sliding shaft portion 1536.

As shown in FIG. 17, together with FIG. 16, for example, the first connecting portion 1533 may be provided with a friction groove 153b.

For example, the friction groove 153b may be located on a side that is of the first connecting portion 1533 and that is away from the second connecting portion 1534. The friction groove 153b may extend in the first direction X. The friction groove 153b may extend in the first direction X, which means a maximum size of the friction groove 153b. For example, a length direction of the friction groove 153b may be approximately parallel to the first direction X.

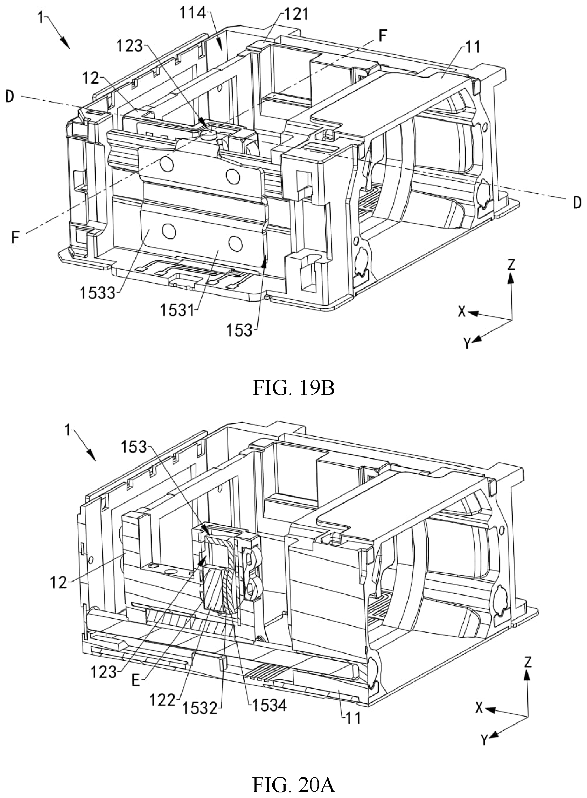

FIG. 19A is a partial exploded view 3 of a motor 1 shown in FIG. 3 in an implementation. FIG. 19B is a diagram 2 of a partial structure of a motor 1 shown in FIG. 3 in an implementation. FIG. 20A is a partial sectional view of an implementation of the motor 1 shown in FIG. 19B at a line D-D.

As shown in FIG. 19A, FIG. 19B, and FIG. 20A, for example, the driven member 153 may be fastened to the carrier 12. The driven member 153 may be movably connected to the base 11. It may be understood that the driven member 153 may be close to the base 11 in a Y-axis direction, to be movably connected to the base 11.

For example, the driven member body 1531 may be movably connected to the base 11. The first connecting portion 1533 may be located on a side that is of the base 11 and that is away from the carrier body 121, and is slidably connected to the base 11. A part of the second connecting portion 1534 may span the base 11 and extend into the accommodation space 114 of the base 11.

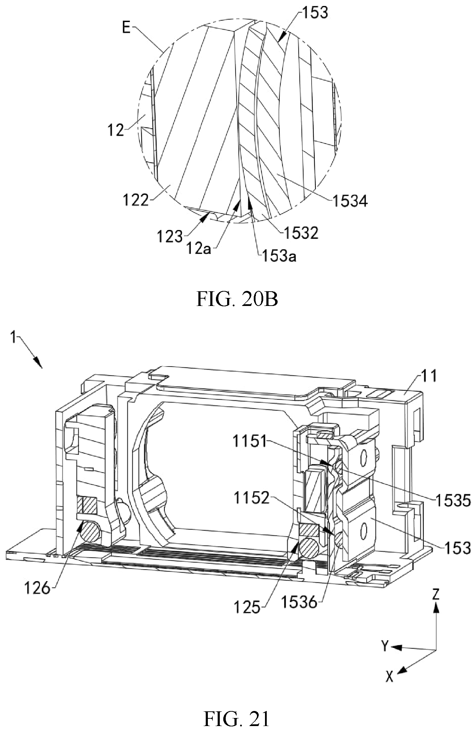

FIG. 20B is an enlarged diagram of a structure of an implementation of the motor 1 shown in FIG. 20A at a location E.

As shown in FIG. 19A to FIG. 20B, for example, at least a part of the magnetic attraction member 1532 may be located in the first groove 123. The magnetic body 122 and the magnetic attraction member 1532 may be disposed opposite to each other, and the magnetic body 122 and the magnetic attraction member 1532 may be fastened.

It may be understood that, by disposing the first connecting portion 1533 and the second connecting portion 1534 on two sides of the base 11, a movable connection between the driven member 153 and the base 11 and fastening between the driven member 153 and the carrier can be implemented simultaneously. In addition, the second connecting portion 1534 extends into the accommodation space 114, so that space of the motor 1 can be saved, and space utilization of the motor 1 can be improved.

It may be understood that, at least a part of the magnetic body 122 and at least a part of the magnetic attraction member 1532 are located in the first groove 123, space of the motor 1 in the second direction Y can be fully used, and space utilization of the motor 1 is improved, thereby implementing miniaturization of the motor 1.

In another implementation, positions of the magnetic body 122 and the magnetic attraction member 1532 may be exchanged. In other words, the driven member 153 may include a magnetic body, and the carrier 12 may include a magnetic attraction member. This is not specifically limited in this application.

As shown in FIG. 20B, for example, the driven member 153 may have the first connecting surface 153a. In an implementation, a surface that is of the magnetic attraction member 1532 and that faces the magnetic body 122 may be the first connecting surface 153a.

As shown in FIG. 20B, for example, the carrier 12 may have a second connecting surface 12a. In an implementation, a surface that is of the magnetic body 122 and that faces the magnetic attraction member 1532 may be the second connecting surface 12a.

As shown in FIG. 20A and FIG. 20B, for example, the first connecting surface 153a may be connected to the second connecting surface 12a through magnetic attraction. The first connecting surface 153a and the second connecting surface 12a may be fastened through point contact. In other words, the driven member 153 and the carrier 12 may be fastened through point contact. In an actual product, the driven member 153 or the carrier 12 is deformed or misplaced to an extent at a position of point contact, which causes contact in a small area. It is also considered by default that the driven member 153 and the carrier 12 are fastened to each other through point contact.

It may be understood that the first connecting surface 153a and the second connecting surface 12a are connected through magnetic attraction through point contact, a degree-of-freedom limitation between the piezoelectric actuator 15 and the carrier 12 can be decoupled, and point contact between the carrier 12 and the driven member 153 only limits the carrier 12 in the first direction X. In this way, when the position of the driven member 153 deviates relative to the base 11 by a large angle, such a deviation is unlikely to be transferred to the carrier 12 through point contact between the carrier 12 and the driven member 153, the carrier 12 is unlikely to be affected by the driven member 153, and the position of the carrier 12 is unlikely to deviate relative to the base 11 by a large angle. Therefore, the carrier 12 can stably perform reciprocating motion in the first direction X relative to the base 11, improving reliability of the carrier 12.

As shown in FIG. 20A and FIG. 20B, for example, one of at least a part of the first connecting surface 153a and at least a part of the second connecting surface 12a may be a curved surface, and the other may be a flat surface. In an implementation, at least a part of the first connecting surface 153a may be a curved surface, and at least a part of the second connecting surface 12a may be a flat surface. In another implementation, at least a part of the first connecting surface 153a may be a flat surface, and at least a part of the second connecting surface 12a may be a curved surface.

It may be understood that, one of the at least a part of the first connecting surface 153a and the at least a part of the second connecting surface 12a is a curved surface, and the other is a flat surface, point contact between the first connecting surface 153a and the second connecting surface 12a can be implemented, thereby implementing point contact between the driven member 153 and the carrier 12. In this way, a position change of the driven member 153 in a direction other than the first direction X is unlikely to be transferred to the carrier 12, and reliability of the carrier 12 is high.

For example, both at least a part of the first connecting surface 153a and at least a part of the second connecting surface 12a may be curved surfaces.

It may be understood that, both the at least a part of the first connecting surface 153a and the at least a part of the second connecting surface 12a are curved surfaces, point contact between the first connecting surface 153a and the second connecting surface 12a can be implemented, thereby implementing point contact between the driven member 153 and the carrier 12. In this way, a position change of the driven member 153 in a direction other than the first direction X is unlikely to be transferred to the carrier 12, and reliability of the carrier 12 is high.

For example, the first connecting surface 153a may be an arc surface, and the second connecting surface 12a may be a flat surface.

It may be understood that, the first connecting surface 153a is an arc surface, and the second connecting surface 12a is a flat surface, point contact between the first connecting surface 153a and the second connecting surface 12a can be implemented, thereby implementing point contact between the driven member 153 and the carrier 12. In this way, a position change of the driven member 153 in a direction other than the first direction X is unlikely to be transferred to the carrier 12, and reliability of the carrier 12 is high.

In another implementation, the first connecting surface 153a and the second connecting surface 12a may alternatively be disposed in another manner. For example, the first connecting surface 153a may alternatively be a flat surface, and the second connecting surface 12a may alternatively be an arc surface. This is not specifically limited in this application.

For example, a surface that is of the magnetic attraction member 1532 and that faces away from the second connecting surface 12a may be a curved surface, or may be a flat surface, or may be a surface in another form. This is not specifically limited in this application. FIG. 21 is a partial sectional view of an implementation of the motor 1 shown in FIG. 19B at a line F-F.

As shown in FIG. 21, for example, the driven member 153 may be movably connected to the base 11.

For example, at least a part of the first sliding shaft portion 1535 may be located in the first sliding groove 1151, and at least a part of the second sliding shaft portion 1536 may be located in the second sliding groove 1152.

It may be understood that the driven member 153 may be movably connected to the base 11 through the first sliding shaft portion 1535 and the second sliding shaft portion 1536. Both the first sliding groove 1151 and the second sliding groove 1152 extend in the first direction X, and the first sliding groove 1151 and the second sliding groove 1152 may guide the first sliding shaft portion 1535 and the second sliding shaft portion 1536, so that the first sliding shaft portion 1535 and the second sliding shaft portion 1536 can slide in the first direction X. Because both the first sliding shaft portion 1535 and the second sliding shaft portion 1536 are fastened to the second connecting portion 1534, the first sliding shaft portion 1535 and the second sliding shaft portion 1536 may drive the driven member 153 to move relative to the base 11 in the first direction X.

It may be understood that, because both the cross section of the first sliding shaft portion 1535 and the cross section of the second sliding shaft portion 1536 may be approximately in a semicircular shape, in a process in which the driven member 153 moves relative to the base 11, noise generated between the first sliding shaft portion 1535, the second sliding shaft portion 1536, and the base 11 is small, and user experience is better.

For example, the cross section of the first sliding groove 1151 is approximately in a "V" shape, and the first sliding shaft portion 1535 abuts against the two side walls of the first sliding groove 1151. In other words, the first sliding shaft portion 1535 is zero-clearance fitted to the two side walls of the first sliding groove 1151.

It may be understood that, the first sliding groove 1151 can limit a sliding direction of the first sliding shaft portion 1535, so that the first sliding shaft portion 1535 slides relative to an extension direction (namely, the first direction X) of the first sliding groove 1151. This can reduce a probability that the first sliding shaft portion 1535 deviates, thereby reducing a probability that the driven member 153 deviates when moving in the first direction X, and further reducing a probability that the carrier 12 deviates when moving in the first direction X.

In addition, there is specific movement space between the second sliding shaft portion 1536 and the second sliding groove 1152, to reduce a possibility of interference, thereby avoiding a phenomenon that the driven member 153 is stuck when moving in the first direction X.

For example, the first support groove 125 and the second support groove 126 may extend in the first direction X, and the first support groove 125 and the second support groove 126 may be arranged in the second direction Y. The first sliding groove 1151 and the second sliding groove 1152 may extend in the first direction X, and the first sliding groove 1151 and the second sliding groove 1152 may be arranged in the third direction Z. The first support groove 125 and the second support groove 126 may be independent of the first sliding groove 1151 and the second sliding groove 1152, and an arrangement direction of the first support groove 125 and the second support groove 126 may be approximately perpendicular to an arrangement direction of the first sliding groove 1151 and the second sliding groove 1152.

It may be understood that an extension direction of the first support groove 125 and the second support groove 126 may be approximately parallel to an extension direction of the first sliding groove 1151 and the second sliding groove 1152. In this way, the carrier 12 and the driven member 153 can move in the first direction X together. An arrangement direction of the first support groove 125 and the second support groove 126 may be approximately perpendicular to an arrangement direction of the first sliding groove 1151 and the second sliding groove 1152. The first support groove 125 and the second support groove 126 that are connected to the carrier 12 and the first sliding groove 1151 and the second sliding groove 1152 that are connected to the piezoelectric actuator 15 are independent of each other, and are approximately orthogonally arranged. In this way, motion stability of the carrier 12 and the driven member 153 can be ensured.

As shown in FIG. 21, together with FIG. 17 and FIG. 18, the first boss 1537 of the first sliding shaft portion 1535 and the second boss 1538 of the first sliding shaft portion 1535 may abut against the two groove walls of the first sliding groove 1151. The third boss 1539 of the second sliding shaft portion 1536 may abut against the second sliding groove 1152.

It may be understood that, the base 11 and the first sliding shaft portion 1535 are in contact through the first boss 1537 and the second boss 1538, and the base 11 and the second sliding shaft portion 1536 are in contact through the third boss 1539. In such a three-point contact manner, the base 11 is connected to the first sliding shaft portion 1535 and the second sliding shaft portion 1536 more stably, thereby improving stability of movement of the driven member 153 in the first direction X relative to the base 11, and improving stability of movement of the carrier 12 in the first direction X relative to the base 11.

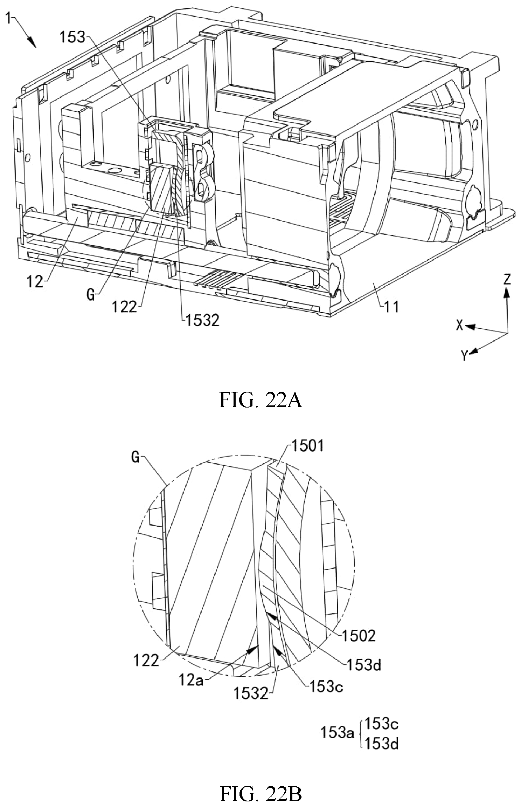

FIG. 22A is a partial sectional view of another implementation of the motor 1 shown in FIG. 19B at a line D-D. FIG. 22B is an enlarged diagram of a structure of an implementation of the motor 1 shown in FIG. 22A at a location G.

As shown in FIG. 22A and FIG. 22B, for example, the first connecting surface 153a may include a flat surface 153c and an arc surface 153d, and the arc surface 153d may be connected to the flat surface 153c. The second connecting surface 12a may be a flat surface.

For example, the arc surface 153d of the first connecting surface 153a may be connected to the second connecting surface 12a through magnetic attraction.

It may be understood that, a part of the first connecting surface 153a is an arc surface 153d, and the second connecting surface 12a is a flat surface, point contact between the first connecting surface 153a and the second connecting surface 12a can be implemented, thereby implementing point contact between the magnetic attraction member 1532 and the magnetic body 122, and further implementing point contact between the driven member 153 and the carrier 12. In this way, the position change of the driven member 153 in the direction other than the first direction X is unlikely to be transferred to the carrier 12, and the carrier 12 is unlikely to move in the direction other than the first direction X relative to the base 11, improving reliability of the carrier 12.

As shown in FIG. 22A and FIG. 22B, for example, the magnetic attraction member 1532 may include a magnetic attraction member body 1501 and a convex hull 1502. A surface that is of the magnetic attraction member body 1501 and that faces the magnetic body 122 may be a flat surface. The convex hull 1502 may be convexly disposed on a surface that is of the magnetic attraction member body 1501 and that faces the magnetic body 122, and is fastened to the magnetic attraction member body 1501.

For example, the convex hull 1502 may be connected to the magnetic body 122 through magnetic attraction through point contact.

For example, a surface that is of the magnetic attraction member 1532 and that faces away from the second connecting surface 12a may be a curved surface, or may be a flat surface, or may be a surface in another form. This is not specifically limited in this application.

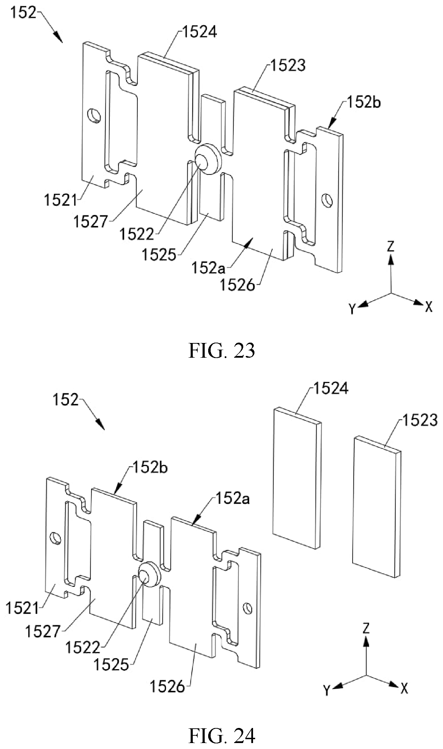

FIG. 23 is a diagram of a structure of a resonator 152 shown in FIG. 16 in an implementation. FIG. 24 is a partial exploded view of an implementation of the resonator 152 shown in FIG. 23.

As shown in FIG. 23 and FIG. 24, for example, the resonator 152 may include an elastomer 1521, a driving foot 1522, a first piezoelectric ceramic 1523, and a second piezoelectric ceramic 1524. It should be understood that FIG. 23, FIG. 24, and accompanying drawings in the following descriptions merely show some parts included in the resonator 152 as an example. Actual shapes, actual sizes, actual positions, and actual structures of the parts are not limited by FIG. 23, FIG. 24, and the accompanying drawings in the following descriptions. For example, the resonator 152 may include more or fewer structures.

For example, the elastomer 1521 may include a first surface 152a and a second surface 152b that are disposed facing away from each other.

For example, the driving foot 1522 may be fastened to the first surface 152a. The first piezoelectric ceramic 1523 and the second piezoelectric ceramic 1524 may be spaced apart and fastened to the second surface 152b.

It may be understood that, the first piezoelectric ceramic 1523 and the second piezoelectric ceramic 1524 may be deformed when being powered on, and the elastomer 1521 may convert such a deformation into a macro displacement.

For example, the elastomer 1521 may include a driving portion 1525, a first excitation portion 1526, and a second excitation portion 1527. In an implementation, the driving portion 1525, the first excitation portion 1526, and the second excitation portion 1527 may be approximately in a " 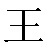 " shape.

In another implementation, the driving portion 1525, the first excitation portion 1526, and the second excitation portion 1527 may alternatively be roughly in another shape. This is not specifically limited in this application.

For example, the driving foot 1522 may be located on one side of the driving portion 1525, and is fastened to the driving portion 1525. The first piezoelectric ceramic 1523 may be located on a side that is of the first excitation portion 1526 and that is away from the driving foot 1522, and is fastened to the first excitation portion 1526. The second piezoelectric ceramic 1524 may be located on a side that is of the second excitation portion 1527 and that is away from the driving foot 1522, and is fastened to the second excitation portion 1527.

For example, a surface of the first piezoelectric ceramic 1523 and a surface of the second piezoelectric ceramic 1524 may be coated with an electrode layer (not shown in the figure), and the first piezoelectric ceramic 1523 and the second piezoelectric ceramic 1524 may be polarized in a thickness direction (namely, the second direction Y) of the first piezoelectric ceramic 1523 and the second piezoelectric ceramic 1524, thereby being deformed in a direction (namely, the first direction X) that is approximately perpendicular to the thickness direction of the first piezoelectric ceramic 1523 and the second piezoelectric ceramic 1524, to excite a symmetric bending vibration mode and an anti-symmetric bending vibration mode of the first excitation portion 1526 and the second excitation portion 1527.

For example, vibration of the first excitation portion 1526 and the second excitation portion 1527 may drive the driving portion 1525 to perform reverse bending vibration, and may further drive the driving foot 1522 to perform transverse vibration, in a length direction (namely, the first direction X) of the elastomer 1521, that is approximately parallel to a plane (namely, an X-Z plane) on which the elastomer 1521 is located.

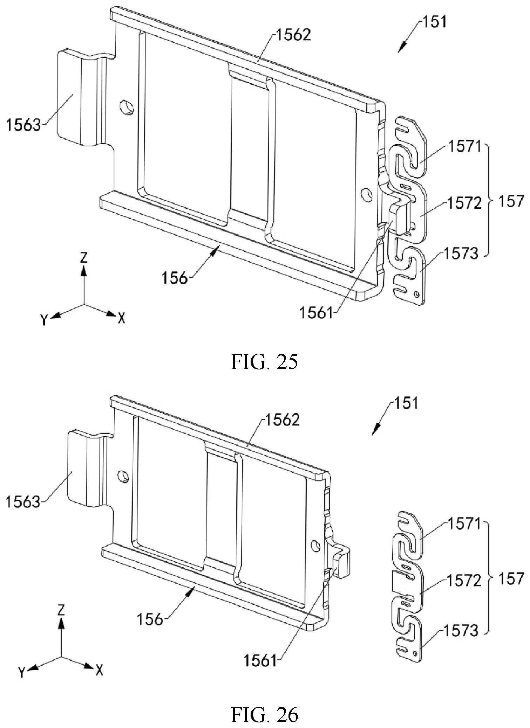

FIG. 25 is a diagram of a partial structure of a pre-pressing component 151 shown in FIG. 16 in an implementation. FIG. 26 is a partial exploded view of the pre-pressing component 151 shown in FIG. 25 in an implementation.

As shown in FIG. 25 and FIG. 26, together with FIG. 16, for example, the pre-pressing component 151 may include a bracket 156, a spring plate 157, and a pressure pin 158.

For example, the bracket 156 may include a first end 1561, a middle portion 1562, and a second end 1563 that are sequentially connected.

For example, the spring plate 157 may include a first end 1571, a middle portion 1572, and a second end 1573 that are sequentially connected. In an implementation, the first end 1571, the middle portion 1572, and the second end 1573 of the spring plate 157 may all be elastically deformed. An elastic deformation is a change in a relative position between points of a solid due to an external force. After the external force is withdrawn, the solid can be restored to an original state. In other words, after an external force exerted on the spring plate 157 is withdrawn, the spring plate 157 may be restored to an original state.

As shown in FIG. 25, for example, the spring plate 157 may be fastened to the bracket 156. In an implementation, the middle portion 1572 of the spring plate 157 may be fastened to the first end 1561 of the bracket 156.

For example, the spring plate 157 may be fastened to the bracket 156 through bonding, welding, or the like. In another implementation, the spring plate 157 may alternatively be fastened to the bracket 156 in another manner.

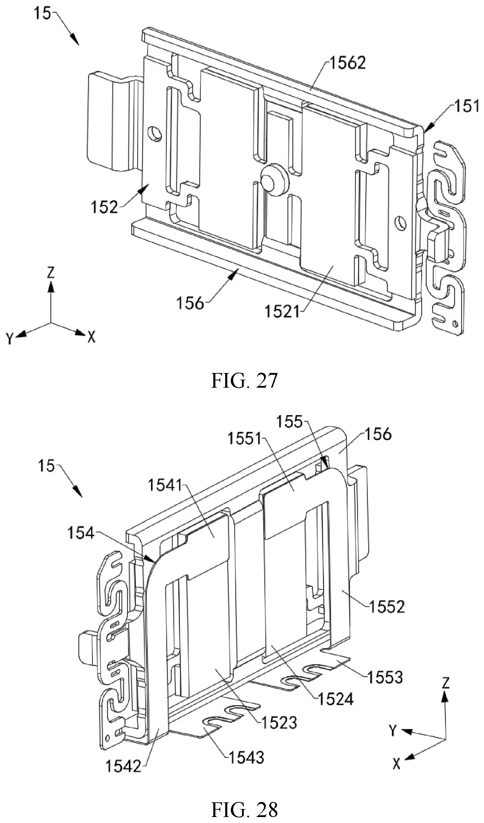

FIG. 27 is a diagram of a partial structure of a piezoelectric actuator 15 shown in FIG. 4 in an implementation.

As shown in FIG. 27, for example, the resonator 152 may be fastened to the bracket 156. In an implementation, the resonator 152 may be fastened to the middle portion 1562 of the bracket 156.

For example, the elastomer 1521 may be fastened to the pre-pressing component 151. In an implementation, the elastomer 1521 may be fastened to the bracket 156.

It may be understood that the pre-pressing component 151 may fasten and support the elastomer 1521.

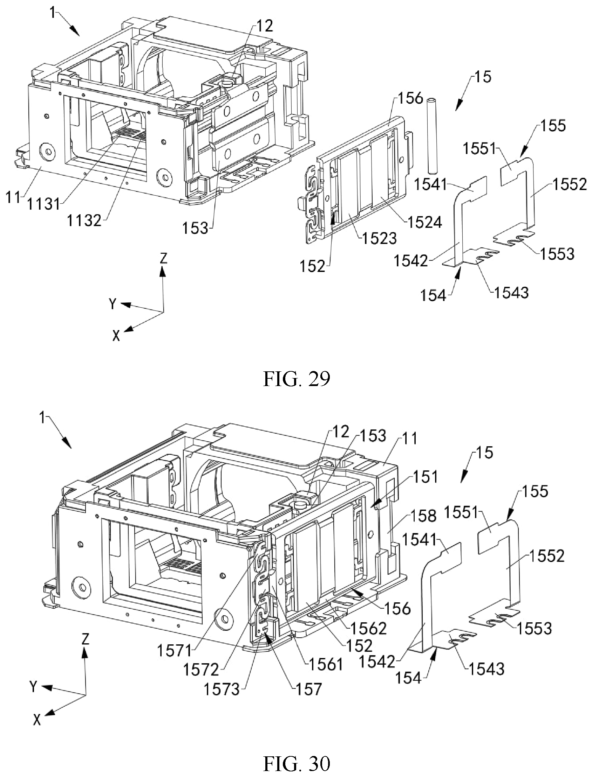

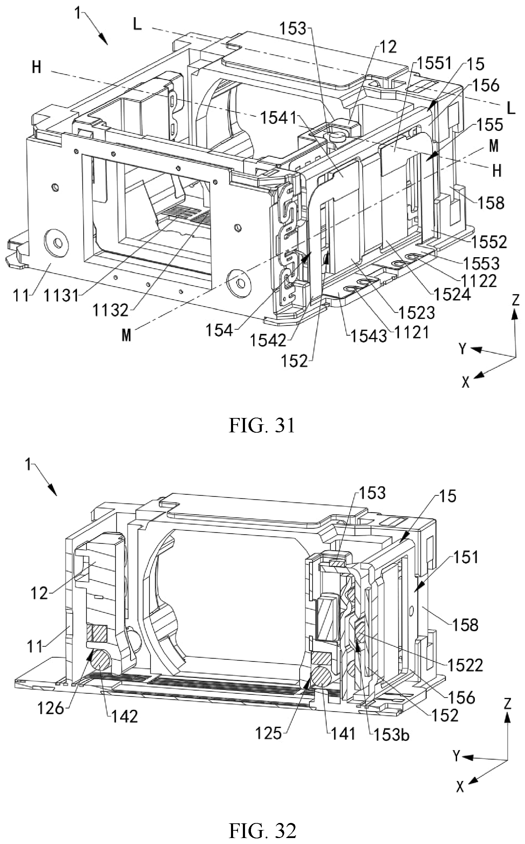

FIG. 28 is a diagram of a partial structure of a piezoelectric actuator 15 shown in FIG. 4 in an implementation. FIG. 29 is a partial exploded view 4 of a motor 1 shown in FIG. 3 in an implementation. FIG. 30 is a partial exploded view 5 of a motor 1 shown in FIG. 3 in an implementation. FIG. 31 is a diagram 3 of a partial structure of a motor 1 shown in FIG. 3 in an implementation.

As shown in FIG. 28 to FIG. 31, for example, the first circuit board 154 may include a first connection terminal 1541, a first middle terminal 1542, and a second connection terminal 1543 that are sequentially connected.

For example, the first connection terminal 1541 of the first circuit board 154 may be fastened to and electrically connected to the first piezoelectric ceramic 1523. The first middle terminal 1542 of the first circuit board 154 may be fastened to the bracket 156. The second connection terminal 1543 of the first circuit board 154 may be located between the bracket 156 and the base 11.

For example, the second circuit board 155 may include a third connection terminal 1551, a second middle terminal 1552, and a fourth connection terminal 1553.

For example, the third connection terminal 1551 of the second circuit board 155 may be fastened to and electrically connected to the second piezoelectric ceramic 1524. The second middle terminal 1552 of the second circuit board 155 may be fastened to the bracket 156. The fourth connection terminal 1553 of the second circuit board 155 may be located between the bracket 156 and the base 11.

As shown in FIG. 31, together with FIG. 7, for example, the piezoelectric actuator 15 may be electrically connected to the base 11.

For example, the second connection terminal 1543 of the first circuit board 154 may be electrically connected to the first electrical connection terminal 1121. The first trace 1131 may be electrically connected to the first electrical connection terminal 1121 and the third electrical connection terminal 1123. In other words, the first piezoelectric ceramic 1523 of the resonator 152 may be electrically connected to the third electrical connection terminal 1123 through the first circuit board 154, the first electrical connection terminal 1121, and the first trace 1131.

For example, the fourth connection terminal 1553 of the second circuit board 155 may be electrically connected to the second electrical connection terminal 1122. The second trace 1132 may be electrically connected to the second electrical connection terminal 1122 and the fourth electrical connection terminal 1124. In other words, the first piezoelectric ceramic 1523 of the resonator 152 may be electrically connected to the fourth electrical connection terminal 1124 through the second circuit board 155, the second electrical connection terminal 1122, and the second trace 1132.

FIG. 32 is a partial sectional view of an implementation of the motor 1 shown in FIG. 31 at a line H-H.

As shown in FIG. 31 and FIG. 32, for example, the piezoelectric actuator 15 may be movably connected to the base 11, and fastened to the carrier 12. The piezoelectric actuator 15 may be configured to drive the carrier 12 to move in the first direction X relative to the base 11.

For example, the driven member 153 may be movably connected to the base 11, and the resonator 152 may be movably connected to the driven member 153. In an implementation, the resonator 152 may be movably connected to the driven member 153 through the driving foot 1522.

For example, the pre-pressing component 151 may be fastened to the base 11.

As shown in FIG. 30 and FIG. 32, for example, the first end 1561 of the bracket 156 may be fastened to the base 11, and the first end 1571 and the second end 1573 of the spring plate 157 may be fastened to the base 11. The second end 1563 (as shown in FIG. 25) of the bracket 156 may be fastened to the base 11, the pressure pin 158 may be fastened to the base 11, and the second end 1563 of the bracket 156 is fastened to the base 11.

It may be understood that the spring plate 157 elastically fastens the first end 1561 of the bracket 156 to the base 11, and a reverse K value of the spring plate 157 is small, to avoid a large pre-pressing force variation of the spring plate 157. In addition, the pressure pin 158 fastens the second end 1563 of the bracket 156 to the base 11, and the pressure pin 158 can limit the bracket 156, thereby preventing a spring plate 157 from being inelastically deformed. An inelastic deformation is a change in a relative position between points of a solid due to an external force. After the external force is withdrawn, the solid cannot be restored to an original state.

As shown in FIG. 31 and FIG. 32, for example, the pre-pressing component 151 may be configured to press the driving foot 1522 of the resonator 152 on the driven member 153. The driving foot 1522 of the resonator 152 may be located in the friction groove 153b of the driven member 153, and is in contact with a groove wall of the friction groove 153b.

It may be understood that, the driving foot 1522 of the resonator 152 can rub against the groove wall of the friction groove 153b, to generate an action force in the first direction X, and drive the driven member 153 to move in the first direction X relative to the resonator 152.

It may be understood that, the pre-pressing component 151 may be configured to provide the resonator 152 with a pre-pressing force for abutting against the driven member 153, so that the resonator 152 can closely abut against the driven member 153 under an action of the pre-pressing force, thereby helping transfer a macro displacement generated through micro vibration of the resonator 152 to the driven member 153.

For example, the resonator 152 is configured to drive, when being powered on, the driven member 153 to drive the carrier 12 to move in the first direction X relative to the base 11.

It may be understood that the piezoelectric actuator 15 can control the carrier 12 to move in the first direction X relative to the base 11, to implement focusing of the camera module 100 (as shown in FIG. 2). In this implementation, the piezoelectric actuator 15 can drive the carrier 12 to move. Therefore, the motor 1 in this implementation is not a moving-magnet motor or a moving-coil motor. In this way, electromagnetic interference between a plurality of different magnets can be avoided. Because a size of the motor 1 does not need to be increased to free up space for avoiding magnetic interference, a problem of a large size of the motor 1 can be avoided, and this helps implement miniaturization of the motor 1 in this implementation.

As shown in FIG. 32, for example, the first support groove 125 may be closer to the piezoelectric actuator 15 than the second support groove 126. The first support member 141 abuts against the two side walls of the first support groove 125. The first support member 141 is zero-clearance fitted to the two side walls of the first support groove 125.

It may be understood that, the first support groove 125 is disposed on a side close to the piezoelectric actuator 15, and the piezoelectric actuator 15 may be located on a side on which the carrier 12 closely fits the first support member 141. In this way, stability of the carrier 12 in a movement process can be improved, and the carrier 12 is not inclined by a large angle, thereby improving reliability of the carrier 12.

For example, the second support member 142 abuts against one side wall of the second support groove 126, and the second support member 142 is zero-clearance fitted to one side wall of the second support groove 126.

In this way, there may be a gap between the second support member 142 and the second support groove 126. The gap may enable the second support member 142 to have specific movement space on a surface that is approximately perpendicular to the first direction X, to reduce a possibility of interference, and avoid a phenomenon that the carrier 12 is stuck when moving in the first direction X.

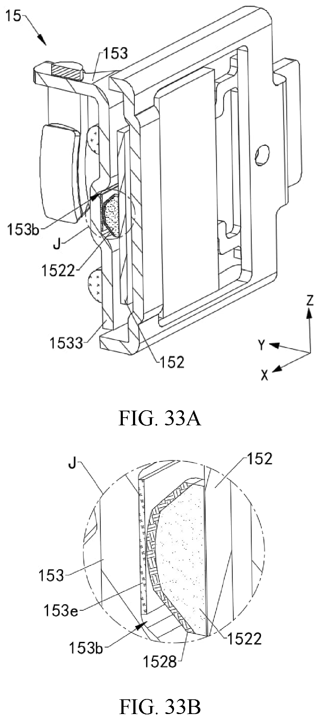

FIG. 33A is a partial sectional view of an implementation of a piezoelectric actuator 15 shown in FIG. 4 at a line I-I. FIG. 33B is an enlarged diagram of a structure of an implementation of the piezoelectric actuator 15 shown in FIG. 33A at a location J.

As shown in FIG. 33A and FIG. 33B, for example, a first wear-resistant layer 1528 may be disposed on a surface of the driving foot 1522. The first wear-resistant layer 1528 may abut against the driven member 153.

For example, a material of the first wear-resistant layer 1528 may include a nitride. The first wear-resistant layer 1528 may be formed on the surface of the driving foot 1522 based on a stainless steel surface nitriding technology.

It may be understood that hardness of stainless steel and the nitride is large, and hardness of the first wear-resistant layer 1528 is also large, so that hardness of the surface of the driving foot 1522 can be improved. In this way, in a process of friction between the driving foot 1522 and the driven member 153, the driving foot 1522 is unlikely to wear or drop chips, a dark spot or a dark shadow is unlikely to appear in an image or a video captured by the camera module 100, and imaging quality of the camera module 100 is high.

In another implementation, the material of the first wear-resistant layer 1528 may alternatively include another material. This is not specifically limited in this application.

For example, a second wear-resistant layer 153e may be disposed on the groove wall of the friction groove 153b of the driven member 153. The second wear-resistant layer 153e may abut against the first wear-resistant layer 1528 of the driving foot 1522.

For example, a material of the second wear-resistant layer 153e may include a nitride. The second wear-resistant layer 153e may be formed on a surface of the driven member 153 based on the stainless steel surface nitriding technology.

It may be understood that hardness of the stainless steel is large, and hardness of the second wear-resistant layer 153e is also large, so that hardness of the groove wall of the friction groove 153b of the driven member 153 can be improved. In this way, in a process of friction between the driving foot 1522 and the driven member 153, the driven member 153 is unlikely to wear or drop chips, a dark spot or a dark shadow is unlikely to appear in an image or a video captured by the camera module 100 (as shown in FIG. 2), and imaging quality of the camera module 100 is high.

In another implementation, the material of the second wear-resistant layer 153e may alternatively include another material. This is not specifically limited in this application.

In another implementation, the driven member 153 may not be provided with the friction groove 153b, and the second wear-resistant layer 153e may be located on a surface that is of the first connecting portion 1533 of the driven member 153 and that faces the driving foot 1522 of the resonator 152. This is not specifically limited in this application.

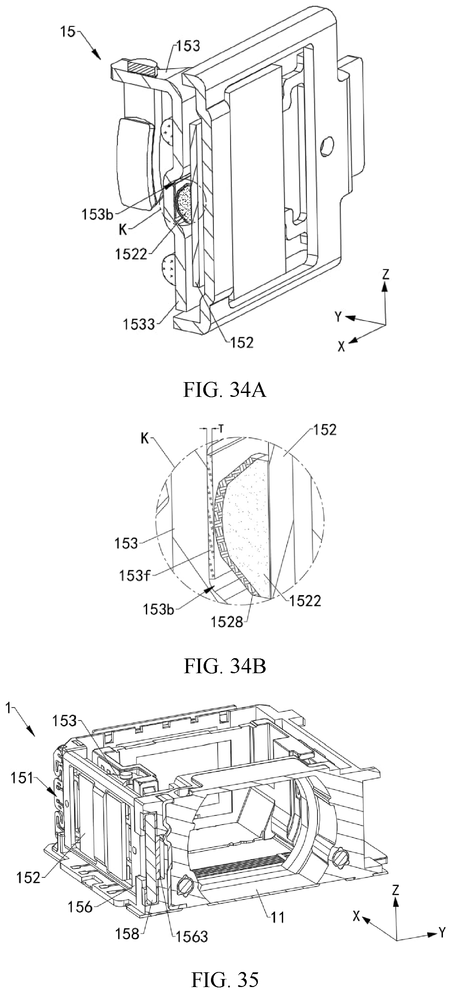

FIG. 34A is a partial sectional view of another implementation of a piezoelectric actuator 15 shown in FIG. 4 at a line I-I. FIG. 34B is an enlarged diagram of a structure of an implementation of the piezoelectric actuator 15 shown in FIG. 34A at a location K.

As shown in FIG. 34A and FIG. 34B, for example, a ceramic layer 153f may be disposed on the groove wall of the friction groove 153b of the driven member 153. The ceramic layer 153f may abut against the first wear-resistant layer 1528 of the driving foot 1522.

In an implementation, the ceramic layer 153f may cover a bottom of the groove wall of the friction groove 153b. The driving foot 1522 may be in contact with a surface of the ceramic layer 153f.

For example, a material of the ceramic layer 153f may include ceramic.

It may be understood that hardness of the ceramic is large, and hardness of the ceramic layer 153f is also large, so that hardness of the groove wall of the friction groove 153b of the driven member 153 can be improved. In this way, in a process of friction between the driving foot 1522 and the driven member 153, the driven member 153 is unlikely to wear or drop chips, a dark spot or a dark shadow is unlikely to appear in an image or a video captured by the camera module 100 (as shown in FIG. 2), and imaging quality of the camera module 100 is high.

In another implementation, the material of the ceramic layer 153f may alternatively include another material. This is not specifically limited in this application.

For example, a thickness T of the ceramic layer 153f may satisfy T≥0.05 mm. For example, T may be equal to 0.05 mm, 0.1 mm, 0.18 mm, 0.23 mm, or 0.3 mm.

It may be understood that, the thickness T of the ceramic layer 153f is set to be in a range greater than or equal to 0.05 mm, the thickness of the ceramic layer 153f is large, and the hardness of the ceramic layer 153f is also large, so that hardness of the groove wall of the friction groove 153b of the driven member 153 can be improved. In this way, in a process of friction between the driving foot 1522 and the driven member 153, the driven member 153 is unlikely to wear or drop chips, a dark spot or a dark shadow is unlikely to appear in an image or a video captured by the camera module 100 (as shown in FIG. 2), and imaging quality of the camera module 100 is high.

In another implementation, the thickness of the ceramic layer 153f may alternatively satisfy another range. This is not specifically limited in this application.

In another implementation, the driven member 153 may not be provided with the friction groove 153b, and the ceramic layer 153f may be located on a surface that is of the first connecting portion 1533 of the driven member 153 and that faces the driving foot 1522 of the resonator 152. This is not specifically limited in this application.

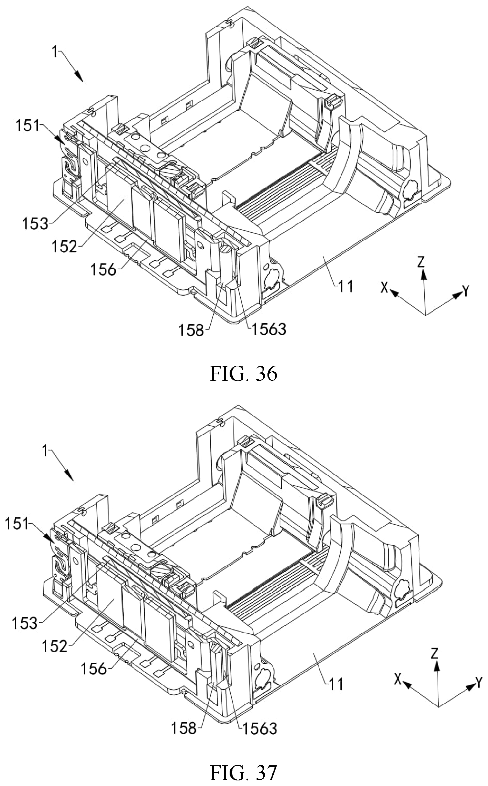

FIG. 35 is a partial sectional view of an implementation of the motor 1 shown in FIG. 31 at a line L-L. FIG. 36 is a partial sectional view of an implementation of the motor 1 shown in FIG. 31 at a line M-M.

As shown in FIG. 35 and FIG. 36, for example, the pressure pin 158 may be fastened to the base 11, and the pressure pin 158 may be in contact with the second end 1563 of the bracket 156.

For example, the pressure pin 158 may be fastened to the base 11 through bonding, welding, or the like.

In another implementation, the pressure pin 158 may alternatively be fastened to the base 11 in another manner such as a riveting manner. This is not specifically limited in this application.

For example, a cross section that is of the pressure pin 158 and that is approximately perpendicular to the third direction Z may be approximately in a circular shape.

It may be understood that a contact manner between the pressure pin 158 and the second end 1563 of the bracket 156 may be contact between an arc surface and a flat surface. In other words, a contact manner between the pressure pin 158 and the bracket 156 may be line contact. In an actual product, the pressure pin 158 or the bracket 156 is deformed or misplaced to an extent at a position of line contact, which causes contact in a small area. It may be also considered by default that the pressure pin 158 or the bracket 156 are fastened to each other through line contact.

It may be understood that, when contact between the pressure pin 158 and the bracket 156 is line contact. This can improve anti-torsion stability of the bracket 156. In this way, the pre-pressing component 151 can provide the driving foot 1522 (as shown in FIG. 32) of the resonator 152 with a pre-pressing force for a squeeze toward the driven member 153, and the resonator 152 can closely abut against the driven member 153 under an action of the pre-pressing force, thereby helping ensure a transfer of a macro displacement generated through micro vibration of the resonator 152 to the driven member 153. In addition, because contact between the pressure pin 158 and the bracket 156 is line contact, the bracket 156 has a strong anti-swing capability, so that output force fluctuation and noise caused by swinging of the bracket 156 can be avoided, and user experience is better.

In another implementation, a cross section of the pressure pin 158 may alternatively be approximately in another shape. For example, the cross section of the pressure pin 158 may alternatively be approximately in a semicircular shape, and an arc surface of the pressure pin 158 is in contact with the second end 1563 of the bracket 156. In this case, a contact manner between the pressure pin 158 and the bracket 156 may also be line contact. This is not specifically limited in this application.

FIG. 37 is a partial sectional view of another implementation of the motor 1 shown in FIG. 31 at a line M-M.

As shown in FIG. 37, for example, the cross section that is of the pressure pin 158 and that is approximately perpendicular to the third direction Z may be approximately in a polygonal shape. In an implementation, the cross section of the pressure pin 158 may be approximately in a hexagonal shape. The hexagonal shape may be a regular hexagonal shape, or may be a hexagon in another form. This is not specifically limited in this application.

It may be understood that, when contact between the pressure pin 158 and the bracket 156 is surface contact. This can improve anti-torsion stability of the bracket 156. In this way, the pre-pressing component 151 can provide the driving foot 1522 (as shown in FIG. 32) of the resonator 152 with a pre-pressing force for a squeeze toward the driven member 153, and the resonator 152 can closely abut against the driven member 153 under an action of the pre-pressing force, thereby helping ensure a transfer of a macro displacement generated through micro vibration of the resonator 152 to the driven member 153.

In another implementation, the cross section of the pressure pin 158 may alternatively be approximately in another shape. For example, the cross section of the pressure pin 158 may alternatively be approximately in a quadrilateral shape, a pentagonal shape, an irregular shape, or the like. In this case, a contact manner between the pressure pin 158 and the bracket 156 may also be surface contact. This is not specifically limited in this application.

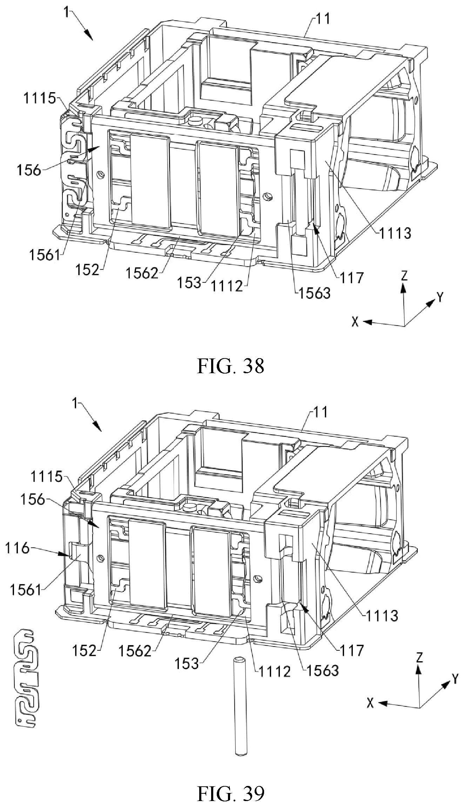

FIG. 38 is a diagram of a structure of the motor 1 shown in FIG. 31 at another angle. FIG. 39 is a partial exploded view of the motor 1 shown in FIG. 38 in an implementation.

As shown in FIG. 38 and FIG. 39, for example, the bracket 156 may be located between the second side plate 1113 and the fourth side plate 1115 of the base 11. In an implementation, the middle portion 1562 of the bracket 156 may separately abut against one end that is of the second side plate 1113 and that is close to the first side plate 1112 and one end that is of the fourth side plate 1115 and that is close to the first side plate 1112.

It may be understood that, the second side plate 1113 and the fourth side plate 1115 of the base 11 may limit the bracket 156 in the first direction X, the bracket 156 is unlikely to be detached from the base 11, improving reliability of the bracket 156. When the driven member 153 moves relative to the base 11, the bracket 156 may provide the resonator 152 with a stable pre-pressing force, so that the driving foot 1522 (as shown in FIG. 32) of the resonator 152 can closely abut against the driven member 153, and the resonator 152 is connected to the driven member 153 more reliably.

For example, the first end 1561 of the bracket 156 may be fastened to the first limiting groove 116, and the second end 1563 of the bracket 156 may be fastened to the second limiting groove 117.

It may be understood that the base 11 may limit the bracket 156 in the third direction Z, the bracket 156 is unlikely to be detached from the base 11, improving reliability of the bracket 156. When the driven member 153 moves relative to the base 11, the bracket 156 may provide the resonator 152 with a stable pre-pressing force, so that the driving foot 1522 (as shown in FIG. 32) of the resonator 152 can closely abut against the driven member 153, and the resonator 152 is connected to the driven member 153 more reliably.

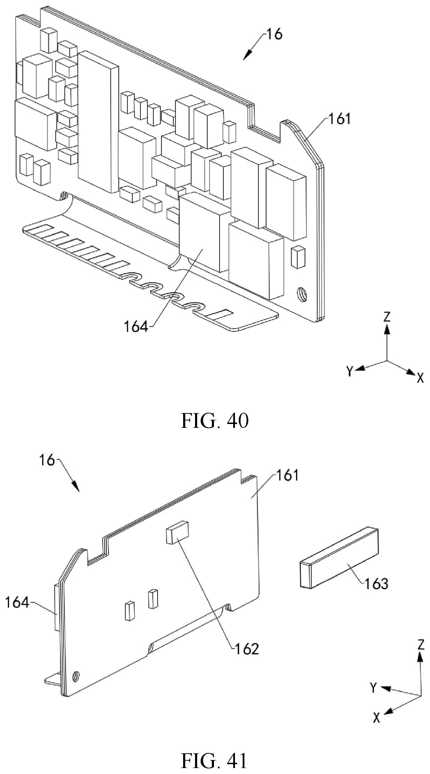

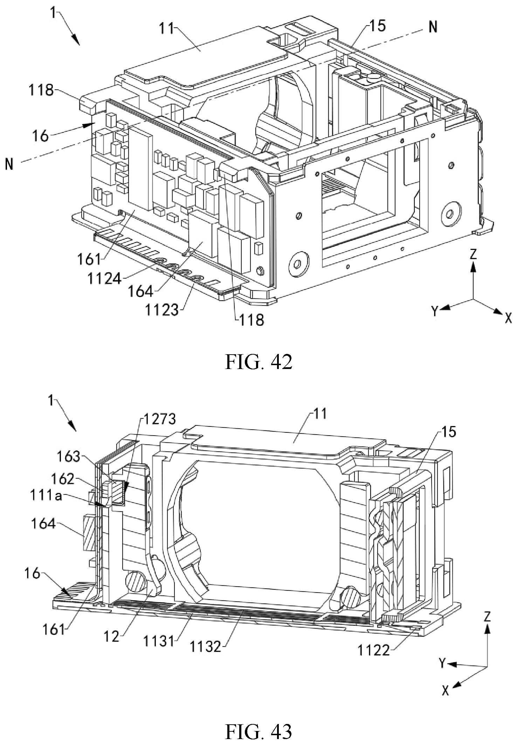

FIG. 40 is a diagram of a partial structure of a circuit board assembly 16 shown in FIG. 4 at another angle. FIG. 41 is a diagram of a partial structure of the circuit board assembly 16 shown in FIG. 40 at another angle. FIG. 42 is a diagram 4 of a partial structure of a motor 1 shown in FIG. 3 in an implementation. FIG. 43 is a partial sectional view of an implementation of the motor 1 shown in FIG. 42 at a line N-N.

As shown in FIG. 40 to FIG. 43, for example, the circuit board assembly 16 may include a main circuit board 161, a position sensor 162, a third magnetic member 163, and an electronic component 164.

As shown in FIG. 41, for example, the position sensor 162 may be fastened to one side of the main circuit board 161, and is electrically connected to the main circuit board 161.

As shown in FIG. 42 and FIG. 43, for example, the circuit board assembly 16 may be fastened to the base 11, and is located on a side that is of the base 11 and that is away from the piezoelectric actuator 15.

For example, the main circuit board 161 may be fastened to the base 11, and is located on a side that is of the base 11 and that is away from the piezoelectric actuator 15.

For example, the main circuit board 161 may be fastened to the base 11 through bonding, or the like. In another implementation, the main circuit board 161 may alternatively be fastened to the base 11 in another manner. This is not specifically limited in this application.

As shown in FIG. 43, for example, at least a part of the position sensor 162 may be located in the third through hole 111a and the fourth through hole 111b (as shown in FIG. 6) of the base 11.

As shown in FIG. 43, for example, the third magnetic member 163 may be fastened to the carrier 12. In an implementation, at least a part of the third magnetic member 163 may be located in the third mounting groove 1273 of the carrier 12.

As shown in FIG. 43, for example, the position sensor 162 may be disposed opposite to the third magnetic member 163.

For example, the position sensor 162 may be a tunnel magneto-resistance (Tunnel Magneto-Resistance, TMR) sensor or a Hall sensor (Hall sensor).

For example, an operating principle of the TMR sensor is based on a tunnel magneto-resistance effect. To be specific, two magnetic layers are separated by one non-magnetic layer to form a structure. When an external magnetic field (for example, a magnetic field provided by the third magnetic member 163) interacts with a magnetic field at the magnetic layer, a direction of the magnetic field changes, thereby changing a value of tunnel magneto-resistance. A change in a resistance value is related to a change in the external magnetic field, and therefore can be used to detect strength and the direction of the magnetic field.

For example, an operating principle of the Hall sensor is based on a Hall effect. To be specific, when a current passes through a conductor, if the conductor is in the magnetic field (for example, a magnetic field provided by the third magnetic member 163), a specific potential difference is generated on two sides of the conductor. The potential difference is related to the strength and direction of the magnetic field, and therefore may be used to detect the strength and direction of the magnetic field.

It may be understood that, the position sensor 162 may detect a change in the magnetic field of the third magnetic member 163, and a processor may obtain a real-time position of the carrier 12 based on a detection result of the position sensor 162. In this way, a displacement amount of the carrier 12 can be accurately controlled, closed-loop control on the carrier 12 is implemented, and reliability of the carrier 12 is high.

In another implementation, the position sensor 162 may alternatively be another type of sensor. This is not specifically limited in this application.

As shown in FIG. 40 and FIG. 42, the electronic component 164 may be fastened to the main circuit board 161, and is located on a side that is of the main circuit board 161 and that is away from the base 11.

For example, in the second direction Y, a height of the anti-collision protrusion 118 of the base 11 may be greater than a height of the electronic component 164.

It may be understood that, because a height of the anti-collision protrusion 118 in the second direction Y is greater than a height of the electronic component 164 in the second direction Y, the anti-collision protrusion 118 may protect the electronic component 164. Another part is more likely to collide with the anti-collision protrusion 118 than the electronic component 164, the electronic component 164 is unlikely to collide with the another part, the electronic component 164 is unlikely to be faulty or even damaged due to a collision, and reliability of the electronic component 164 and the circuit board assembly 16 is high.

As shown in FIG. 42 and FIG. 43, together with FIG. 31, for example, the third electrical connection terminal 1123 and the fourth electrical connection terminal 1124 may be electrically connected to the main circuit board 161.

For example, the first circuit board 154 may be electrically connected to the main circuit board 161 through the first electrical connection terminal 1121, the first trace 1131, and the third electrical connection terminal 1123. The second circuit board 155 may be electrically connected to the main circuit board 161 through the second electrical connection terminal 1122, the second trace 1132, and the fourth electrical connection terminal 1124. In this way, the piezoelectric actuator 15 may be electrically connected to the circuit board assembly 16.

It may be understood that, the piezoelectric actuator 15 may be electrically connected to the circuit board assembly 16 through the base 11, and the piezoelectric actuator 15 can be electrically connected without being provided with an additional structural member. This helps reduce a quantity of structural members of the motor 1, thereby helping implement miniaturization of the motor 1.

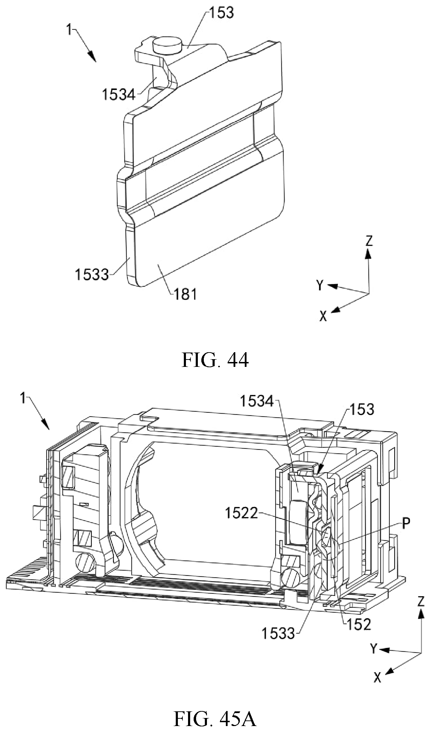

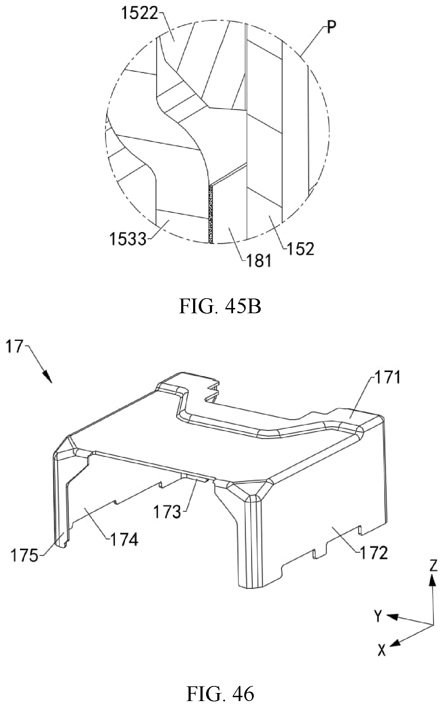

FIG. 44 is a diagram of a partial structure of the motor 1 shown in FIG. 4 in an implementation. FIG. 45A is a partial sectional view of an implementation of a motor 1 shown in FIG. 3 at a line O-O. FIG. 45B is an enlarged diagram of a structure of an implementation of the motor 1 shown in FIG. 45A at a location P.

As shown in FIG. 44, FIG. 45A, and FIG. 45B, for example, the motor 1 may further include a first dust-capturing adhesive 181.

For example, the first dust-capturing adhesive 181 may be fastened to the driven member 153, and is located on a side that is of the driven member 153 and that is close to the resonator 152. In an implementation, the first dust-capturing adhesive 181 may be fastened to the first connecting portion 1533 of the driven member 153, and is located on a side that is of the first connecting portion 1533 of the driven member 153 and that is away from the second connecting portion 1534.

It may be understood that, the first dust-capturing adhesive 181 may capture a chip generated through friction between the driving foot 1522 of the resonator 152 and the driven member 153, to prevent the chip from falling on a lens, thereby avoiding a case in which a dark spot or a dark shadow appears in an image captured by the camera module 100 (as shown in FIG. 2), and improving imaging quality of the camera module 100.

FIG. 46 is a diagram of a partial structure of a housing 17 shown in FIG. 4 in an implementation.

As shown in FIG. 46, for example, the housing 17 may include a top 171, a first side portion 172, a second side portion 173, a third side portion 174, and a fourth side portion 175.

For example, the first side portion 172, the second side portion 173, the third side portion 174, and the fourth side portion 175 may be located on a same side of the top 171, and are fastened to the top 171. The first side portion 172 and the third side portion 174 may be disposed opposite to each other and spaced apart, and the second side portion 173 may be connected between the first side portion 172 and the third side portion 174. The second side portion 173 and the fourth side portion 175 may be disposed opposite to each other and spaced apart, and the first side portion 172 may be connected between the second side portion 173 and the fourth side portion 175. In another implementation, the housing 17 may alternatively be of another structure. This is not specifically limited in this application.

It may be understood that, to facilitate description of a specific structure and shape of the housing 17, the housing 17 is divided into five parts for description in this implementation, but this does not affect a fact that the housing 17 may be of an integral structure. To be specific, the top 171, the first side portion 172, the second side portion 173, the third side portion 174, and the fourth side portion 175 may be integrally formed. In another implementation, the housing 17 may alternatively include different independent structural members based on an assembly process. For example, the first side portion 172, the second side portion 173, the third side portion 174, and the fourth side portion 175 of the housing 17 may be independent structural members, and are fastened to the top 171 through bonding, welding, or the like.

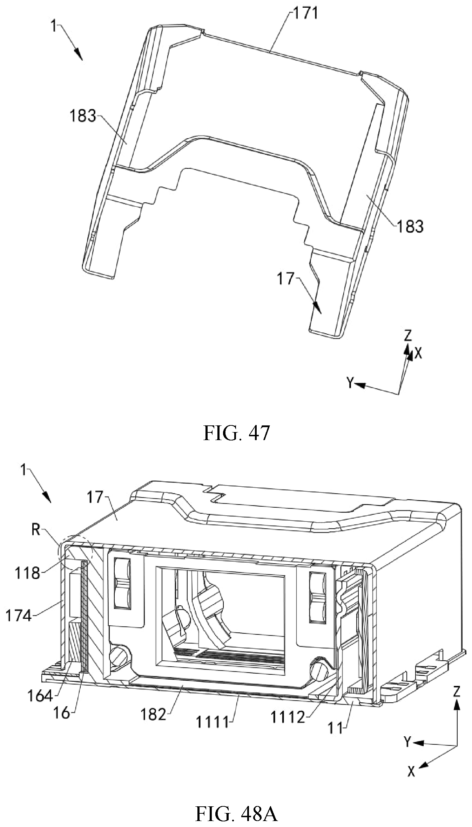

FIG. 47 is a diagram of a partial structure of a motor 1 shown in FIG. 3 at another angle. FIG. 48A is a partial sectional view of an implementation of a motor 1 shown in FIG. 3 at a line Q-Q.

As shown in FIG. 47 and FIG. 48A, for example, the motor 1 may further include a second dust-capturing adhesive 182 and a third dust-capturing adhesive 183.

As shown in FIG. 48A, for example, the second dust-capturing adhesive 182 may be located on the bottom plate 1111 fastened to the base 11, and located on a side that is of the bottom plate 1111 and that is close to the first side plate 1112.

It may be understood that, the second dust-capturing adhesive 182 may capture a chip generated through friction between the driving foot 1522 (as shown in FIG. 45A) of the resonator 152 and the driven member 153 (as shown in FIG. 45A), to prevent the chip from falling on a lens, thereby avoiding a case in which a dark spot or a dark shadow appears in an image captured by the camera module 100 (as shown in FIG. 2), and improving imaging quality of the camera module 100.

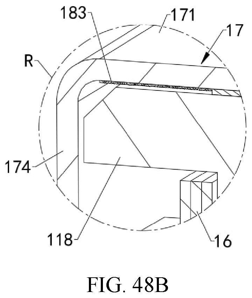

FIG. 48B is an enlarged diagram of a structure of an implementation of the motor 1 shown in FIG. 48A at a location R.

As shown in FIG. 47, FIG. 48A, and FIG. 48B, for example, the third dust-capturing adhesive 183 may be fastened to the top 171 of the housing 17, and is located on a side that is of the top 171 and that is close to the base 11.

It may be understood that, the third dust-capturing adhesive 183 may capture a chip generated through friction between the driving foot 1522 (as shown in FIG. 45A) of the resonator 152 and the driven member 153 (as shown in FIG. 45A), to prevent the chip from falling on a lens, thereby avoiding a case in which a dark spot or a dark shadow appears in an image captured by the camera module 100 (as shown in FIG. 2), and improving imaging quality of the camera module 100.

As shown in FIG. 48A and FIG. 48B, the anti-collision protrusion 118 of the base 11 may be disposed opposite to the third side portion 174 of the housing 17.

It may be understood that, in a process of assembling the housing 17 on the base 11, the housing 17 is unlikely to collide with the electronic component 164 of the circuit board assembly 16, and the electronic component 164 is unlikely to be faulty or even damaged due to a collision, thereby ensuring reliability of the electronic component 164 and further ensuring reliability of the circuit board assembly 16 and the motor 1.

It should be noted that implementations of this application or features in implementations may be combined with each other when there is no conflict, and any combination of features in different implementations also falls within the protection scope of this application. In other words, the plurality of implementations described above may alternatively be combined according to an actual requirement.

It should be noted that all the foregoing accompanying drawings are example figures of this application, and do not represent actual sizes of products. In addition, a size proportion relationship between the parts in the accompanying drawings is not intended to limit an actual product in this application. The foregoing descriptions are merely some implementations and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor (1), comprising a base (11), a carrier (12), and a piezoelectric actuator (15), wherein the carrier (12) is movably connected to the base (11), the piezoelectric actuator (15) is movably connected to the base (11) and is fastened to the carrier (12), and the piezoelectric actuator (15) is configured to drive the carrier (12) to move in a first direction relative to the base (11);
the piezoelectric actuator (15) comprises a pre-pressing component (151), a resonator (152), and a driven member (153);
the driven member (153) is movably connected to the base (11) and is fastened to the carrier (12);
the resonator (152) is fastened to the pre-pressing component (151), the pre-pressing component (151) is fastened to the base (11), the pre-pressing component (151) is configured to press a driving foot (1522) of the resonator (152) against the driven member (153), and the resonator (152) is configured to drive, when being powered on, the driven member (153) to drive the carrier (12) to move in the first direction relative to the base (11); and
the driven member (153) has a first connecting surface (153a), the carrier (12) has a second connecting surface (12a), and the first connecting surface (153a) is connected to the second connecting surface (12a) through magnetic attraction.

2. The motor (1) according to claim 1, wherein one of at least a part of the first connecting surface (153a) and at least a part of the second connecting surface (12a) is a curved surface, and the other is a flat surface; or at least a part of the first connecting surface (153a) and at least a part of the second connecting surface (12a) each are a curved surface.

3. The motor (1) according to claim 2, wherein the first connecting surface (153a) is an arc surface, and the second connecting surface (12a) is a flat surface; or the first connecting surface (153a) comprises a flat surface (153c) and an arc surface (153d), the arc surface (153d) is connected to the flat surface (153c), the second connecting surface (12a) is a flat surface, and the arc surface of the first connecting surface (153a) is fastened to the second connecting surface (12a).

4. The motor (1) according to any one of claims 1 to 3, wherein the carrier (12) comprises a carrier body (121) and a magnetic body (122), the magnetic body (122) is fastened to the carrier body (121), and the carrier body (121) is movably connected to the base (11); and
the driven member (153) comprises a driven member body (1531) and a magnetic attraction member (1532), the magnetic attraction member (1532) is fastened to the driven member body (1531), the driven member body (1531) is movably connected to the base (11), the magnetic body (122) and the magnetic attraction member (1532) are disposed opposite to each other, a surface that is of the magnetic attraction member (1532) and that faces the magnetic body (122) is the first connecting surface (153a), and a surface that is of the magnetic body (122) and that faces the magnetic attraction member (1532) is the second connecting surface (12a).

5. The motor (1) according to claim 4, wherein the carrier body (121) is provided with a first groove (123), and at least a part of the magnetic body (122) and at least a part of the magnetic attraction member (1532) are located in the first groove (123).

6. The motor (1) according to claim 4, wherein the base (11) encloses accommodation space (114), and at least a part of the carrier (12) is located in the accommodation space (114);
the driven member body (1531) comprises a first connecting portion (1533) and a second connecting portion (1534), the second connecting portion (1534) is bent and connected to the first connecting portion (1533) and is at least partially located on one side of the first connecting portion (1533), and the magnetic attraction member (1532) is fastened to the second connecting portion (1534); and
the first connecting portion (1533) is located on a side that is of the base (11) and that is away from the carrier body (121) and is slidably connected to the base (11), and a part of the second connecting portion (1534) crosses the base (11) and extends into the accommodation space (114).

7. The motor (1) according to claim 6, wherein the driven member body (1531) further comprises a first sliding shaft portion (1535) and a second sliding shaft portion (1536), and the first sliding shaft portion (1535) and the second sliding shaft portion (1536) are convexly disposed on a surface that is of the first connecting portion (1533) and that faces the second connecting portion (1534); and
the base (11) comprises a first sliding groove (1151) and a second sliding groove (1152), at least a part of the first sliding shaft portion (1535) is located in the first sliding groove (1151), and at least a part of the second sliding shaft portion (1536) is located in the second sliding groove (1152).

8. The motor (1) according to claim 7, wherein the motor (1) further comprises a first support member (141) and a second support member (142), and the carrier (12) is movably connected to the base (11) through the first support member (141) and the second support member (142);
the carrier body (121) comprises a first support groove (125) and a second support groove (126) that are spaced apart, at least a part of the first support member (141) is located in the first support groove (125), and at least a part of the second support member (142) is located in the second support groove (126); and
both the first support groove (125) and the second support groove (126) extend in the first direction, both the first support groove (125) and the second support groove (126) are arranged in a second direction, both the first sliding groove (1151) and the second sliding groove (1152) extend in the first direction, the first sliding groove (1151) and the second sliding groove (1152) are arranged in a third direction, and the first direction, the second direction, and the third direction are different from each other.

9. The motor (1) according to claim 8, wherein the first support groove (125) comprises a first side wall (1251) and a second side wall (1252), the first side wall (1251) and the second side wall (1252) are disposed opposite to each other and inclined, a distance between the first side wall (1251) and the second side wall (1252) at an opening of the first support groove (125) is greater than a distance between the first side wall (1251) and the second side wall (1252) at a bottom of a groove body of the first support groove (125), and the first support member (141) is in contact with the first side wall (1251) and the second side wall (1252); and
the first support groove (125) is closer to the piezoelectric actuator (15) than the second support groove (126).

10. The motor (1) according to claim 9, wherein a cross section of the first support groove (125) is in a "V" shape or in a trapezoidal shape.

11. The motor (1) according to any one of claims 8 to 10, wherein the motor (1) further comprises a first magnetic member (131) and a second magnetic member (132), and the first magnetic member (131) and the second magnetic member (132) are fastened to the carrier (12); and
the first support member (141) is made of a magnetic attraction material, and the first support member (141) and the first magnetic member (131) are disposed opposite to each other; and/or the second support member (142) is made of a magnetic attraction material, and the second support member (142) and the second magnetic member (132) are disposed opposite to each other.

12. The motor (1) according to any one of claims 7 to 10, wherein a first boss (1537) and a second boss (1538) that are spaced apart are convexly disposed on a surface of the first sliding shaft portion (1535), and the first boss (1537) and the second boss (1538) abut against the first sliding groove (1151); and
a third boss (1539) is convexly disposed on a surface of the second sliding shaft portion (1536), and the third boss (1539) abuts against the second sliding groove (1152).

13. The motor (1) according to claim 12, wherein a cross section of the first sliding shaft portion (1535) and a cross section of the second sliding shaft portion (1536) are in a semicircular shape.

14. The motor (1) according to claim 6, wherein the first connecting portion (1533) of the driven member (153) is provided with a friction groove (153b), and the driving foot (1522) of the resonator (152) is located in the friction groove (153b) and is in contact with a groove wall of the friction groove (153b).

15. The motor (1) according to any one of claims 1 to 3, wherein a first wear-resistant layer (1528) is disposed on a surface of the driving foot (1522) of the resonator (152), and a material of the first wear-resistant layer (1528) comprises a nitride.

16. The motor (1) according to any one of claims 1 to 3, wherein the driven member (153) is provided with a second wear-resistant layer (153e), and a material of the second wear-resistant layer (153e) comprises a nitride.

17. The motor (1) according to any one of claims 1 to 3, wherein the driven member (153) is provided with a ceramic layer (153f), the driving foot (1522) of the resonator (152) is in contact with the ceramic layer (153f), and a thickness T of the ceramic layer (153f) meets T≥0.05 mm.

18. The motor (1) according to claim 14, wherein the pre-pressing component (151) comprises a bracket (156) and a pressure pin (158), the bracket (156) comprises a first end (1561), a middle portion (1562), and a second end (1563) that are connected in sequence, and the resonator (152) is fastened to the middle portion (1562) of the bracket (156); and
the first end (1561) of the bracket (156) is fastened to the base (11), the pressure pin (158) is fastened to the base (11), and the second end (1563) of the bracket (156) is fastened to the base (11).

19. The motor (1) according to claim 18, wherein the base (11) is provided with a first limiting groove (116), and the first end (1561) of the bracket (156) is fastened to the first limiting groove (116); and/or
the base (11) is provided with a second limiting groove (117), and the second end (1563) of the bracket (156) is fastened to the second limiting groove (117).

20. The motor (1) according to claim 18, wherein the pre-pressing component (151) further comprises a spring plate (157), a first end (1571) and a second end (1573) of the spring plate (157) are fastened to the base (11), and a middle portion (1572) of the spring plate (157) is fastened to the first end (1561) of the bracket (156).

21. The motor (1) according to claim 18, wherein a cross section of the pressure pin (158) is in a circular shape, a semicircular shape, or a polygonal shape.

22. The motor (1) according to claim 18, wherein the resonator (152) comprises an elastomer (1521), the driving foot (1522), a first piezoelectric ceramic (1523), and a second piezoelectric ceramic (1524), and the elastomer (1521) is fastened to the pre-pressing component (151); and
the elastomer (1521) comprises a first surface (152a) and a second surface (152b) that are disposed facing away from each other, the first surface (152a) is disposed facing the driven member (153), the driving foot (1522) is fastened to the first surface (152a), and the first piezoelectric ceramic (1523) and the second piezoelectric ceramic (1524) are spaced apart and fastened to the second surface (152b).

23. The motor (1) according to claim 22, wherein the motor (1) further comprises a circuit board assembly (16), the circuit board assembly (16) comprises a main circuit board (161), a position sensor (162), and a third magnetic member (163), and the third magnetic member (163) is fastened to the carrier (12);
the position sensor (162) is fastened to the main circuit board (161), and is electrically connected to the main circuit board (161); and
the main circuit board (161) is fastened to the base (11), and is located on a side that is of the base (11) and that is away from the piezoelectric actuator (15), and the position sensor (162) and the third magnetic member (163) are disposed opposite to each other.

24. The motor (1) according to claim 23, wherein the piezoelectric actuator (15) further comprises a first circuit board (154) and a second circuit board (155), the first circuit board (154) is fastened to and electrically connected to the first piezoelectric ceramic (1523), and the second circuit board (155) is fastened to and electrically connected to the second piezoelectric ceramic (1524);
the base (11) comprises a base body (111), a first electrical connection terminal (1121), a second electrical connection terminal (1122), a third electrical connection terminal (1123), a fourth electrical connection terminal (1124), a first trace (1131), and a second trace (1132);
the first electrical connection terminal (1121), the second electrical connection terminal (1122), the third electrical connection terminal (1123), and the fourth electrical connection terminal (1124) are spaced apart and fastened to the base body (111), and are exposed out of the base body (111), the first electrical connection terminal (1121) and the second electrical connection terminal (1122) are respectively electrically connected to the first circuit board (154) and the second circuit board (155), and the third electrical connection terminal (1123) and the fourth electrical connection terminal (1124) are electrically connected to the main circuit board (161); and
the first trace (1131) and the second trace (1132) are embedded in the base body (111), the first trace (1131) is electrically connected to the first electrical connection terminal (1121) and the third electrical connection terminal (1123), and the second trace (1132) is electrically connected to the second electrical connection terminal (1122) and the fourth electrical connection terminal (1124).

25. The motor (1) according to claim 23, wherein the circuit board assembly (16) further comprises an electronic component (164), and the electronic component (164) is fastened to the main circuit board (161) and is located on a side that is of the main circuit board (161) and that is away from the base (11); and
the base (11) has an anti-collision protrusion (118), and a height of the anti-collision protrusion (118) is greater than a height of the electronic component (164).

26. The motor (1) according to any one of claims 18 to 25, wherein the motor (1) further comprises a first dust-capturing adhesive (181), and the first dust-capturing adhesive (181) is fastened to the driven member (153) and is located on a side that is of the driven member (153) and that is close to the resonator (152).

27. The motor (1) according to any one of claims 18 to 25, wherein the base (11) comprises a bottom plate (1111), a first side plate (1112), a second side plate (1113), a third side plate (1114), and a fourth side plate (1115), and the first side plate (1112), the second side plate (1113), the third side plate (1114), and the fourth side plate (1115) are located on a same side of the bottom plate (1111), and are fastened to the bottom plate (1111); and
the motor (1) further comprises a second dust-capturing adhesive (182), and the second dust-capturing adhesive (182) is fastened to the bottom plate (1111) and is located on a side that is of the bottom plate (1111) and that is close to the first side plate (1112).

28. The motor (1) according to any one of claims 18 to 25, wherein the motor (1) further comprises a housing (17) and a third dust-capturing adhesive (183), and the third dust-capturing adhesive (183) is fastened to the housing (17);
the housing (17) comprises a top (171), a first side portion (172), a second side portion (173), a third side portion (174), and a fourth side portion (175), and the first side portion (172), the second side portion (173), the third side portion (174), and the fourth side portion (175) are located on the same side of the top (171) and are fastened to the top (171); and
the housing (17) covers the base (11), and the third dust-capturing adhesive (183) is fastened to the top (171) and is located on a side that is of the top (171) and that is close to the base (11).

29. A camera module (100), comprising a lens and the motor (1) according to any one of claims 1 to 28, wherein the lens is fastened to the carrier (12).

30. An electronic device (1000), comprising a housing (200) and the camera module (100) according to claim 29, wherein the camera module (100) is disposed in the housing (200).
